# EUROPEAN PATENT SPECIFICATION

(11) **EP 4 634 460 B1**
(45) Date of publication and mention of the grant of the patent: **02.09.2026**
(21) Application number: 23833323.1
(22) Date of filing: 13.12.2023
(51) Int. Cl.: E02B 17/00, F03D 13/25, E04H 12/08, E04B 1/58, E04B 1/19, B21C 37/06, B21C 37/29, E04H 12/10

(54) **STRUCTURAL JOINT FOR USE IN AN OFFSHORE SUPPORTING STRUCTURE COMPRISING AN INTERNAL FIBRE REINFORCED POLYMER WRAP**
STRUKTURELLE VERBINDUNG ZUR VERWENDUNG IN EINER OFFSHORE-STÜTZSTRUKTUR MIT EINER INTERNEN FASERVERSTÄRKTEN POLYMERHÜLLE
JOINT STRUCTURAL DESTINÉ À ÊTRE UTILISÉ DANS UNE STRUCTURE DE SUPPORT EN MER COMPRENANT UNE ENVELOPPE POLYMÈRE RENFORCÉE PAR DES FIBRES INTERNES

(30) Priority: 14.12.2022 NL 2033721
(43) Date of publication of application: 22.10.2025
(73) Proprietor: Tree Composites Holding B.V., 4612 PD Bergen op Zoom (NL)
(72) Inventor: SEGEREN, Maxim Luka Adriaan, 4612 PD Bergen op Zoom (NL); WOLTERS, Mees Peter Gerard, 4612 PD Bergen op Zoom (NL)
(74) Representative: Custos IPC Coöperatie U.A.
(86) International application number: PCT/EP2023/085629
(87) International publication number: WO 2024/126593

(56) References cited:
- WO-A1-2019/212334
- WO-A1-2022/008021

## Description

The present invention relates to a structural joint for use in a supporting structure that is subjected to cyclic loading, a support structure comprising said structural joint, a transition piece comprising said structural joint and a method of manufacturing said structural joint.

Many large supporting structures, such as bridges and foundations for offshore platforms or offshore wind turbines, comprise truss-like structures comprising numerous joints wherein at least two structural members, such a tubular braces and chords, are coupled together. Traditionally, as many of the structures are made from interconnected thin-walled steel tubular members, the structural members are welded together to form the joint. However, the welding process reduces the fatigue resistance of the steel parts and structures. In order to compensate for this effect, larger or, more commonly, thicker members are used to increase the weld area at the connection are used. If thickness is increased this can be done over a certain length, or over the complete member length. Thereby increasing the material usage, weight and costs of the overall structure.

In recent years, structural joints have been introduced wherein the structural members are interconnected by means of applying a fibre reinforced polymer wrap around the respective structural members comprised in the joint, such a joint is, for instance, disclosed in the International Patent Application WO 2019/212334 A1. It was shown that such a (virgin) joint leads to an increased fatigue resistance when compared to traditionally welded joints. A downside of these joints, however, is that for wrapped joints with a high ratio between the diameter of the brace over the diameter of the chord, premature debonding initiation of its secondary bonded interface, which is the interface between the chord and the fibre reinforced polymer wrap, can occur when high (tensile) loads are induced on the braces, thereby leading to a significant reduction in stiffness of said joint.

International patent application WO 2022/008021 A1 discloses an offshore structure with tubular braces that are joined by joints at nodes. The tubular braces may be made of steel. The joint is formed by means of casted concrete or grout in a receiving joint volume in one or both of the braces.

It is a goal of the present invention to alleviate at least a part of the above-mentioned problem. Specifically, it is an object of the invention to improve the fatigue lifetime of a structural joint that is subjected to cyclic loading, in particular to cyclic tensile and bending loading that is introduced through the braces.

Thereto, the invention provides for a structural joint for use in a supporting structure that is subjected to cyclic loading, said structural joint comprising a first structural member and a second structural tubular member,
said first structural member having a first cross section that is, at least partly, defined by a first dimension, such as a width, height or diameter, wherein said first dimension is the largest dimension of said first cross section;
said second structural tubular member having a second cross section that is, at least partly, defined by a second dimension, such as a width, height or diameter, wherein said second dimension is the largest dimension of said second cross section, wherein said first dimension is larger than said second dimension;
wherein said structural members are arranged with respect to each other at a non-zero angle, as measured between a longitudinal direction of the first structural member and a longitudinal axis of the second structural tubular member, and wherein said second structural tubular member protrudes a wall section of the first structural member, wherein said first structural member and said second structural tubular member are interconnected by means of an internal fibre reinforced polymer wrap that is applied around the, preferably full, outer circumference of the second structural tubular member and that is applied on an inside of, and connected to, an inner side of the wall section of the first structural member.

Such a joint, in particular a virgin joint, which is a newly constructed joint, has, due to the application of the internal fibre reinforced polymer wrap, a higher fatigue endurance to cyclic tensile forces that are introduced through the second structural tubular member. **In** the case of a joint having (only) an externally applied fibre reinforced polymer wrap, the different plies comprised in the fibre reinforced polymer wrap, and the connection between the wrap itself and the outer surface of the first structural member, are subject to peel stresses that tend to pull the plies from each other and from the outer surface, such that it contributes to delamination of the fibre reinforced polymer wrap in the joint. By arranging the fibre reinforced polymer wrap on the inside of the first structural member, i.e. on the side of the wall section that is opposite to the direction wherein the tensile forces act, as is described above, the plies of the wrap and its interface to the internal surface of the first structural member are effectively subjected to compressive stresses normal to their plane, such that they are in fact pressed together, thereby significantly reducing delamination. This in turn leads, at least in case of tensile loading applied to the braces, to an increase in the stiffness, maximum load bearing capacity (i.e. ultimate load capacity) and fatigue endurance of the joint.

As the second tubular members protrude through the wall section of the first structural member, they extend inwardly, as seen with respect to the inner side of the wall section, into the first structural member, thereby allowing to apply the fibre reinforced polymer wrap on the inside of the first structural member.

Preferably, the first structural tubular member is a chord member and said second structural tubular member is a brace member of a truss structure. Typically, said first structural member and said second structural tubular members are cylindrical tubular members. In these cases the first and second dimension are thereby respectively the outer diameter of the first structural member and the outer diameter of the second structural tubular member. It will be clear to the skilled person that the invention can be applied to any type of joint, such as K, X, T, N, KT, Y, joints, including combinations of those basic geometries, with gap. In addition, the geometry is not limited to uniplanar but also multiplanar joints are covered, for example KK, TT, XX, YY, KKK, KT or YT.

The structural joints according to the invention do not require welding, as the fibre reinforced wrap acts as a transition member for coupling the respective structural members, such that substantially all (i.e. >95%, preferably >99%, more preferably >99.5%, most preferably >99.9%) of the tensile forces transferred between said structural members are transferred through the fibre reinforced polymer wrap(s). Although said structural members are preferably connected to each other by means of only a, or multiple, fibre reinforced polymer wraps, superficial welding, spot welding, or secondary bonding materials, such as glue or resin type of fixators, may still be applied for maintaining the orientation and position of the structural members with respect to each other during applying of, and/or curing of, the fibre reinforced polymer wrap. Said structural members are, preferably, not connected by means of fully penetrating welds.

In a preferred embodiment, first structural member is a first structural tubular member having a circumferential wall around a longitudinal axis of first structural tubular member, wherein the non-zero angle is measured between the respective longitudinal axis of the respective first and second structural tubular members and wherein said inner side of the wall section is formed by the inner circumferential surface of the circumferential wall the first structural tubular member. The debonding is especially critical for wrapped composite joints comprising a hollow tubular chord member and a hollow tubular brace member, wherein the joint has a high chord diameter (D_{chord}) to brace diameter (D_{brace}) ratio, such as D_{brace}/D_{chord} < 0.4, as the high peel stresses generated in the bonded interface can cause premature debonding initiation especially when high tensile and/or bending loads are considered in the braces. The internal composite wrap as described above thereby avoids, or at least reduces, premature debonding initiation.

Preferably, at least one of the structural tubular members, although this can also apply to all, has substantially constant wall thickness over the length of the structural tubular members. The wall thickness of the structural members at the location of the fibre reinforced polymer wraps can thus be equal to the wall thickness of the structural member at a central location of the structural member that is, for instance, 1, 2, 3 or more times the respective first or second dimension away from the location of the fibre reinforced polymer wraps.

It is preferred that said first structural member comprises a through hole that is arranged through the wall section of the first structural member;
wherein said internal fibre reinforced polymer wrap is arranged to cover, and connect to, an inner circumferential section of the inner side of the wall section that, preferably fully, surrounds the through hole;
preferably wherein said through hole is shaped to correspond to the first cross section allowing a clearance fit of the second structural tubular member, at the non-zero angle, through said through hole.

By arranging the second structural tubular member through the hole, the internal fibre reinforced polymer wrap can, essentially, act as an anchor (or plug)that keeps, when cyclic tensile loads are applied to the second tubular structural member, the second structural member attached to the first structural member in such a way that compression loads are enabled between the respective inner circumferential section and the wrap and inside of the composite wrap, thereby preventing the delamination and/or debonding. The internal fibre reinforce wrap has particular good support on the inner circumferential section, when the size of the through hole, i.e. opening, in the wall section is such that it corresponds, through the use of a clearance fit, to the outer dimensions of the section structural member in its predetermined orientation with respect to the first structural member.

**In** a preferred embodiment, the structural joint further comprises an external fibre reinforced polymer wrap that is applied on an outside of, and connected to, an outer side of the wall section of the first structural member, in particular that is applied around the, preferably full, outer circumference of the first structural tubular member, and that is arranged outside of, and connected to, the, preferably full, outer circumference of the second structural tubular member. Hereby, delamination and/or debonding of the internal fibre reinforced polymer wrap in case of compression loads are applied to the brace, i.e. second structural tubular member, is significantly reduced. Whereas, without the external fibre reinforced polymer wrap, the layers (or plies) of the internal wrap would be subjected to peel stresses that tend to pull the plies from each other and from the inner surface of the first structural member, thereby affecting the structural integrity of the joint. The external fibre reinforced polymer wrap is able to absorb these compressive load from the second structural members in a way that the plies in the external fibre reinforced polymer wrap are pressed together and against the external surface of the first structural member, thereby alleviating the effects of the compressive load from the second structural tubular member on the internal wrap from these compressive load.

It is noted that, as an alternative, or addition, to the external fibre reinforced polymer wrap, the second structural member can also comprise an abutting member and/or section, such as a local thickening applied on the outer circumference, a flange and/or an edge that is formed due to a transition (i.e. increase) in the dimensions of the outer circumference, that is arranged for, when the second structural member protrudes the first structural member, abutting the outer side of the wall section of the first structural member, in particular abutting an outer circumferential section of the outer side of the wall section of the first structural member that surrounds said through hole, such that said second structural tubular member is limited in the length (i.e. how far) it can protrude into the first structural member. **In** fact, the external fibre reinforced polymer wrap can also be considered to be such an abutting member and/or section. Such an abutting member and/or section would thereby also alleviate the effects of the compressive load from the second structural tubular member on the internal wrap from these compressive load.

The combination of both the internal and external fibre reinforced polymer wrap thus leads to a general increase in the stiffness, maximum load bearing capacity and fatigue lifetime of the joint, irrespective of the type of loading applied to the joint. Such a joint is thereby far superior in its resistance to fatigue and ultimate loading, when compared to a traditionally welded joint or polymer wrapped joints that are applied only on the outside of the respective structural members.

It is preferred that the structural joint further comprises a plurality of second structural tubular members, each of said plurality of second structural tubular member having a respective second cross section that is, at least partly, defined by a respective second dimension, such as a width, height or diameter, wherein each respective second dimension is the largest dimension of said respective second cross section of the respective second structural tubular member;
wherein said first structural member and, preferably, each of the plurality of second structural tubular members are arranged with respect to each other at non-zero angles, as measured between the longitudinal direction of the first structural member and the respective longitudinal axis of the respective second structural tubular member of the plurality of second structural tubular members, and wherein the respective second structural tubular member of the plurality of second structural tubular members protrudes, preferably through a respective accordingly shaped second through hole, the wall section of the first structural member;
wherein said first structural member and each respective second structural tubular member of the plurality of second structural tubular members are interconnected by means of an internal fibre reinforced polymer wrap, preferably by means of a corresponding plurality of internal fibre reinforced polymer wraps, that is applied around the, preferably full, outer circumference of the respective second structural tubular member of the plurality of second structural tubular members and that is applied on the inside of, and connected to, the inner side of the wall section of the first structural member.

Hereby, it is enabled that the structural joint couples multiple second structural tubular members with a single first structural member, such that these superior type of joints can be applied in, for instance, multi-legged (offshore) support structures, like tripods and/or jackets, transition pieces for jackets, offshore floating structures, for connecting the legs or floater with the braces that interconnect the respective legs of the multi-legged (offshore) support structure, thereby enabling to produce these multi-legged (offshore) support structure with less material, such as steel, and with a higher fatigue resistance.

It is then further preferred that at least two second structural tubular members of the plurality of second structural tubular members are coupled at the respective inner ends that protrude into the first structural member. The stiffness and ultimate load resistance of the joint are increase even further when the inner ends of the respective second structural tubular members are interconnected. In particular, coupling of the respective inner ends increases the local bending capacity of the first structural member (i.e. localized bending of the wall of the first structural member is further reduced).

It is even further preferred that the at least two second structural tubular members of the plurality of second structural tubular members are coupled using an auxiliary fibre reinforced polymer wrap that is applied around the, preferably full, outer circumference of the inner ends of each of the at least two second tubular structural members of the plurality of second structural tubular members for interconnecting the at least two second structural tubular members of the plurality of second structural tubular members. The auxiliary fibre reinforced polymer wrap allows to couple the inner ends of the respective second structural tubular members in a stiff and reliable manner, thereby avoiding connecting methods that could have negative side effects, such as welding.

The structural joint preferably further comprises an auxiliary structural tubular member, wherein said member is, preferably coaxially, arranged inside of, and preferably parallel to, the first structural member; said auxiliary structural tubular member having a cross section that is, at least partly, defined by a dimension, such as a width, height or diameter, wherein said dimension is the largest dimension of said cross section of the auxiliary structural tubular member, wherein said dimension of the auxiliary structural tubular member is smaller than the first dimension;
wherein the auxiliary structural member is arranged such that its longitudinal axis preferably intersects with the respective longitudinal axis of at least one of the at least two second structural tubular members of the plurality of second structural tubular members; and
wherein the inner ends of the at least two second structural tubular members of the plurality of second structural tubular members are coupled to the auxiliary structural tubular member.

The auxiliary structural tubular member acts as a further stiffening element in the joint as it allows a coupled behavior of the respective structural members. This thus enables a joint having an increased stiffness and ultimate load capacity.

It is then further preferred that the auxiliary fibre reinforced polymer wrap is also applied around the, preferably full, outer circumference of the auxiliary tubular member for coupling the at least two second structural tubular members of the plurality of second structural tubular members at their inner ends to the auxiliary structural tubular member. The auxiliary fibre reinforced polymer wrap allows to couple the inner ends of the respective second structural tubular members with the auxiliary structural member in a stiff and reliable manner, thereby avoiding connecting methods that could have negative side effects, such as welding.

**In** a preferred embodiment of the structural joint, said inner circumferential section surrounding the through hole extends outwardly, with respect to the outer edge of the through hole, along the inner side of the wall section for a length that is at least 0.1 times the second dimension, preferably at least 0.25 times the second dimension, more preferably at least 0.5 times the second dimension, even more preferably at least 1 times the second dimension, most preferably at least 1.5 times the second dimension; and/or
wherein the inner circumferential section surrounding the through hole extends outwardly, with respect to the outer edge of the through hole, along the inner side of the wall section for a length that is no more than 10 times the second dimension, preferably no more than 5 times the second dimension, more preferably no more than 3 times the second dimension, most preferably no more than 2 times the second dimension; and/or
wherein the inner circumferential section does not extend the full inner circumference of the first structural member, more preferably does not extend half the inner circumference of the first structural member.

As the inner circumferential section is the section that is coupled with the internal fibre reinforced polymer wrap, the size of the section is a parameter of interest where the obtained stiffness, fatigue resistance and/or maximum load bearing capacity, at least partially, depends on. It was determined that the respective ranges lead to an optimal performance of the joint, wherein the desired structural characteristics are obtained, while using an excess of applied internal fibre reinforced polymer wrap material is avoided.

This also applies to the preferred embodiment, wherein said external fibre reinforced polymer wrap is arranged to cover, and connect to, an outer circumferential section of the outer circumference that, preferably fully, surrounds the through hole;
wherein said outer circumferential section surrounding the through hole extends outwardly, with respect to the outer edge of the through hole, along the outer side of the wall section for a length that is at least 0.1 times the second dimension, preferably at least 0.25 times the second dimension, more preferably at least 0.5 times the second dimension, even more preferably at least 1 times the second dimension, most preferably at least 1.5 times the second dimension; and/or
wherein the outer circumferential section surrounding the through hole extends outwardly, with respect to the outer edge of the through hole, along the outer side of the wall section for a length that is no more than 10 times the second dimension, preferably no more than 5 times the second dimension, more preferably no more than 3 times the second dimension, most preferably no more than 2 times the second dimension; and/or
wherein the outer circumferential section does not extend the full outer circumference of the first structural member, more preferably does not extend beyond half the outer circumference of the first structural member.

In a preferred embodiment, a non-zero ratio of the second dimension over the first dimension is no more than 0.83, preferably no more than 0.5, more preferably no more than 0.33, even more preferably no more than 0.25, most preferably no more than 0.1. Traditional joints coupling large structural elements with significantly smaller elements are usually prone to problems, due to stress concentrations and local buckling behavior in the large structural elements. The structural joint according to the invention does not suffer from these problems in the same order as the traditional joint, as the application of the (internal and/or external) fibre reinforced polymer wrap reduces these stress concentrations and can prevent the local buckling behavior, as the fibre polymer wrap also locally (i.e. on the shell-level, i.e. local wall-level) of the structural members stiffens the joint, such that the advantages of the fibre reinforced polymer wrap (with respect to traditional welding) increase with decreasing ratios of the second dimension over the first dimension.

Preferably, said structural members are made of metal, in particular steel, more in particular structural grade steel, a composite material, in particular a fibre reinforced composite material, such as a carbon fibre reinforced and/or glass fibre reinforced composite material, or a combination of these. Metals, such as the respective steels, and composite materials have a high structural capacity, thereby making them suitable materials for use in supporting structures.

Preferably, the internal and/or external fibre reinforced polymer wrap has a length in the longitudinal direction of the second structural tubular member which is in the range of 0.1-10 times, preferably 0.5 - 5, more preferably 0.75 - 4, even more preferably 1 - 3, most preferably 1.5 - 2.5 times the second dimension of the second structural tubular member. This allows for a good bonding to the second tubular structural member and allows to shape the fibre reinforced polymer wraps in a smooth, continues way over the length of the wrap such a manner that stress concentrations are reduced as much as possible in the wrap itself, and in the material of the second structural tubular member.

It is preferred that the internal and/or external fibre reinforced polymer wrap has a thickness measured transversely to the longitudinal direction of the second structural tubular member, that is preferably in the range of 0.5 - 10, more preferably 0.75 - 5, even more preferably 1 - 4, most preferably 1.5 - 3 times the thickness of the circumferential wall of the second structural tubular member; and/or wherein the internal and/or external fibre reinforced polymer wrap comprises a tapered section that tapers, in a longitudinal direction of second structural tubular member away from the circumferential wall of the first structural member, from a maximum thickness towards a minimum thickness of said tapered section.. This allows for a good transfer of forces between the respective structural members and also allows to shape the fibre reinforced polymer wraps in a smooth, continues way over the length of the wrap to reduce the thickness, and thus stiffness, of the wrap towards its outer end in such a manner that stress concentrations are reduced as much as possible in the wrap itself, and in the material of the second structural tubular member.

In a second aspect, the invention also relates to a supporting structure comprising a structural joint according to the invention, in particular an offshore supporting structure, comprising, for instance, a sea-bottom fixed multi-membered foundation structure or a floating foundation structure, for supporting an object, such as an offshore platform or wind turbine, wherein said structural joint is arranged for coupling a first support structure section comprising the first structural member and a second support structure section comprising the second structural tubular member. Examples offshore foundations applied in offshore supporting structures are, for instance, monopile foundations, tripod foundations, jacket foundations, gravity based foundations, semi-submersible floating foundation, buoy floating foundation or tension leg platform (TLP) floating foundation. Combinations of these types may also be possible.

As briefly described above, this enables to produce these multi-legged or multi-membered (offshore) support structures with less material, such as steel, and with a higher fatigue resistance or with lower maintenance cost when full composite structure are used. Especially for offshore purposes, where structures are excited by waves and currents, a high fatigue resistance of the structures, and thus the components of the structures, such as the structural joints, is vital for being able to guarantee the required lifetime of the structure. This is even more so for wind turbines, in particular offshore wind turbines, that are also subjected to the aerodynamic loading, which due to for instance turbulence and/or the wake effects of surrounding turbines, cause significant dynamic (i.e. cyclic) loading that is exciting the structures.

In a third aspect, the invention relates to a transition piece for use in an offshore support structure for an offshore wind turbine, wherein said transition piece comprises a structural joint according to any of the preceding embodiments, and wherein said transition piece is arranged for coupling a bottom of a tower of the wind turbine to an upper end of an offshore foundation structure, such as a monopile foundation, tripod foundation, jacket foundation, semi-submersible floating foundation, buoy floating foundation or tension leg platform (TLP) floating foundation. Transition pieces function as, essentially, connectors that enable to connect the bottom of a, generally, tubular wind turbine tower to a top section of the offshore foundation. As the type of structure and/or dimensions of the top section of the offshore foundation and the bottom of the tubular wind tower are typically quite different, the transition piece has to be able to couple these different types and/or dimensions of the respective foundation and tower. In the case of, for instance, a three or four legged jacket foundation, the individual legs of the jacket foundation need to the connected to the cylindrical bottom section of the wind turbine tower. As is explained in relation to the figures below, the joint according to the invention enables obtaining a transition piece that is able to connect such a jacket to a tower in such a way that, for instance, welding can be avoided and a high fatigue resistance of the lightweight supporting structure is obtained.

In a fourth aspect, the invention relates to a method of manufacturing a structural joint according to the invention, comprising the steps of:
- providing the first structural member and second structural tubular member;
- protruding said second structural tubular member at a non-zero angle, as measured between a longitudinal direction of the first structural member and a longitudinal axis of the second structural tubular member, through a wall section of the first structural member;
- holding said structural members to remain protruded at the non-zero angle, optionally providing a temporary and/or auxiliary fixation for holding said structural members with respect to each other at the non-zero angle;
- applying an internal fibre reinforced polymer wrap around the, preferably full, outer circumference of the second structural tubular member and on an inside of, such that is connected to, an inner side of the wall section of the first structural member for interconnecting the first structural member and second structural tubular member.

Preferably a fibre reinforced polymer of the fibre reinforced polymer wrap is provided by mixing a thermoset resin matrix or thermoplast resin matrix with fabrics and/or rovings of a fibre reinforcement. The fibre reinforcement can be embodied with glass fibres, carbon fibres, or similar, and the thermo-set resin matrix can be Unsaturated Polyester, Vinyl Ester, Epoxy or similar.

In a preferred embodiment, the fibre reinforced composite wrap is applied in a series of sequential lamination steps and/or the fibre reinforced composite of the fibre reinforced polymer wrap is provided by mixing a thermoset resin matrix with fabrics, mats and/or rovings of a fibre reinforcement.

The present invention is further illustrated by the following figures, which show preferred embodiments of the structural joint and some applications and are not intended to limit the scope of the invention in any way, wherein:
- Figure 1A schematically shows, in three dimensional perspective view, an embodiment of a structural joint comprising an externally applied fibre reinforced wrap, wherein said joint is not according to the invention.
- Figure 1B schematically shows, in three dimensional cross-sectional view, the embodiment of the structural joint that is not according to the invention.
- Figure 2A schematically shows, in three dimensional perspective view, a first embodiment of a structural joint according to the invention comprising internal and external applied fibre reinforced polymer wraps.
- Figure 2B schematically shows, in three dimensional cross-sectional view, the first embodiment of the structural joint.
- Figure 3A schematically shows, in three dimensional perspective view, a second embodiment of a structural joint according to the invention comprising internal and external applied fibre reinforced polymer wraps.
- Figure 3B schematically shows, in three dimensional cross-sectional view, the second embodiment of the structural joint.
- Figure 4A schematically shows, in three dimensional perspective view, a third embodiment of a structural joint according to the invention comprising internal and external applied fibre reinforced polymer wraps and further comprising an auxiliary fibre reinforced polymer wrap.
- Figure 4B schematically shows, in three dimensional cross-sectional view, the third embodiment of the structural joint.
- Figure 5A schematically shows, in three dimensional perspective view, a fourth embodiment of a structural joint according to the invention comprising internal and external applied fibre reinforced polymer wraps and further comprising an auxiliary fibre reinforced polymer wrap.
- Figure 5B schematically shows, in three dimensional cross-sectional view, the fourth embodiment of the structural joint.
- Figure 6 shows a graph, that is based on finite element simulations performed for the respective embodiments of figures 1A - 5B, wherein the relation between applied tensile force and displacement of the respective braces are shown up to a respective maximum force and corresponding displacement at which the respective structural joint failed.
- Figure 7 shows a graph, that is based on finite element simulations performed for the respective embodiments of figures 1A - 5B, wherein the relation between the stiffness and displacement of the respective braces are shown up to the respective maximum displacement at which the respective structural joint failed.
- Figure 8A schematically shows a frontal view of a first embodiment of a support structure, in particular of a transition piece of an offshore support structure for supporting an offshore wind turbine, wherein the transition piece comprises a structural joint according to the invention.
- Figure 8B schematically shows a, in a top view, a cross-section of the first embodiment of the support structure.
- Figure 9 schematically shows, in a frontal cross-sectional view, a structural joint of the first embodiment of the support structure in more detail.
- Figure 10A schematically shows a frontal view of a second embodiment of a support structure, in particular of a transition piece of an offshore support structure for supporting an offshore wind turbine, wherein the transition piece comprises a structural joint according to the invention.
- Figure 10B schematically shows a, in a top view, a cross-section of the second embodiment of the support structure.

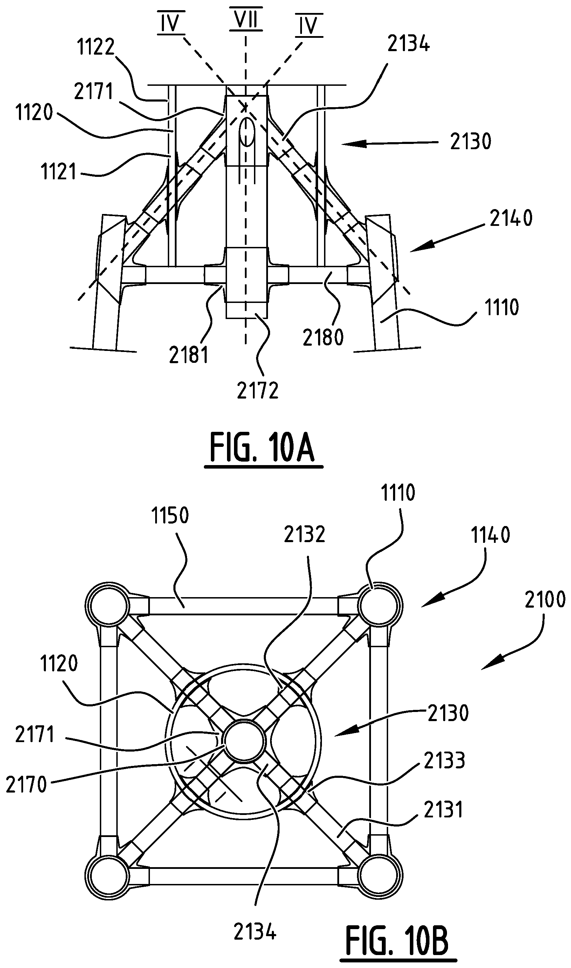

- Figure 10 schematically shows, in a frontal cross-sectional view, a structural joint of the first embodiment of the support structure in more detail.

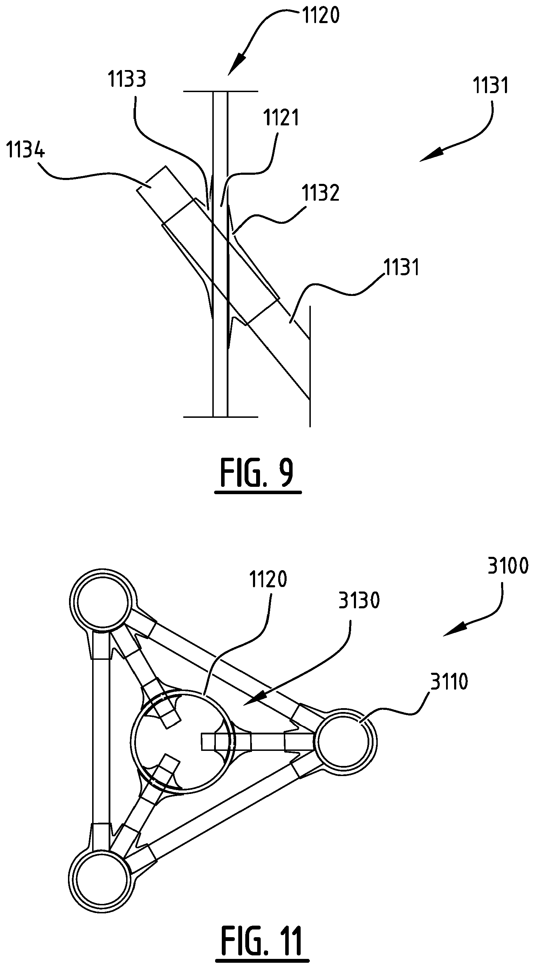

- Figure 11 schematically shows, in a top view, a cross-section of a third embodiment of a support structure, in particular of a transition piece of an offshore support structure for supporting an offshore wind turbine, wherein the transition piece comprises a structural joint according to the invention.

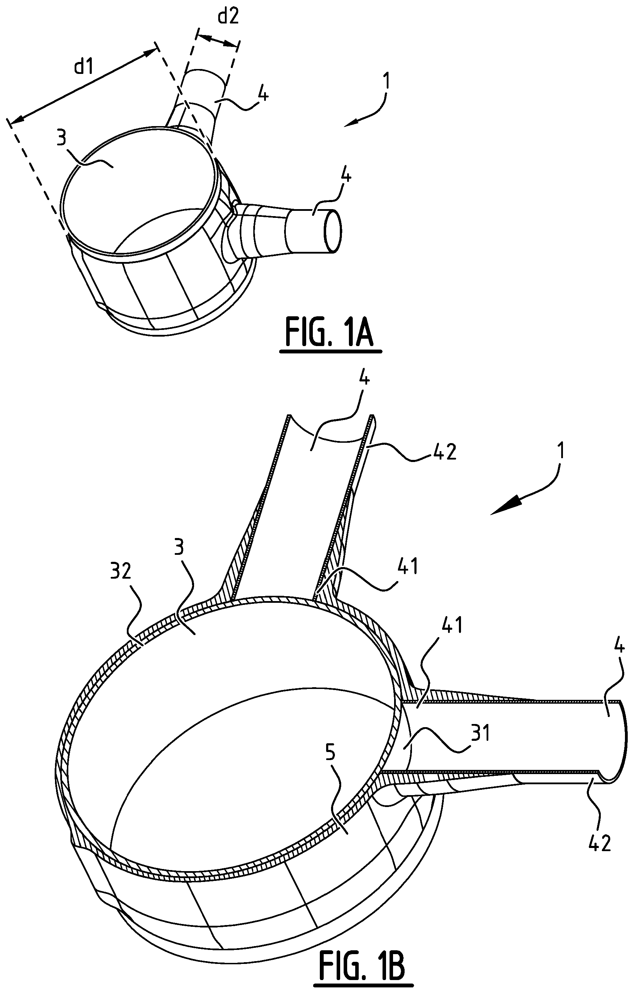

Figure 1A and 1B an embodiment of a structural joint 1 comprising an externally applied fibre reinforced wrap 2, wherein said joint is not according to the current invention, but merely serves as a reference. The joint 1 couples a first structural member, in the following set of examples a chord 3, to at least one second structural tubular members, in the following set of examples a pair of braces 4. The inner ends 41 of the braces 4 abut an outer circumferential surface 31 of the circumferential wall 32 of the chord 3. The braces 4 and chord 3 are coupled to form the joint 1 by applying an external fibre reinforced polymer wrap 5 that is arranged around the outer circumferential surface 42 of the braces and around the outer circumferential surface 31 of the chord 3. The chord 3 is seen to have a first, circular, cross section that is defined by a first diameter d₁ and the brace 104 has a second, circular, cross section that is defined by a second diameter d₂. In the current set of examples, the diameter d₁ of the chord 3 is larger than the diameter of the brace 4.

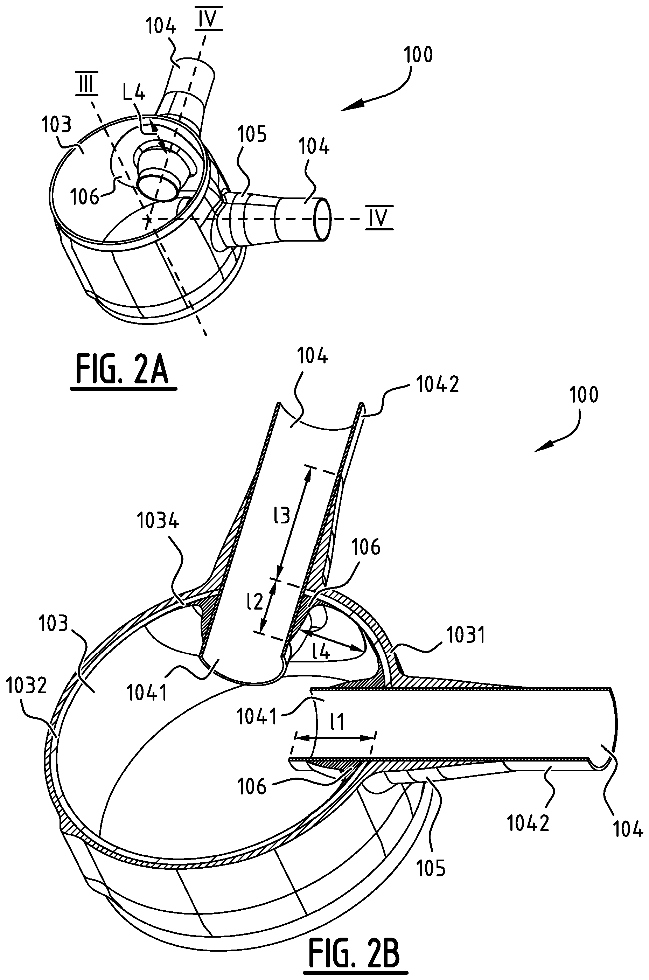

Figure 2A and 2B schematically show a first embodiment of a structural joint 100 according to the invention, having a similar external geometry as the structural joint 1. The joint 100 couples the chord 103 to a pair braces 104. Joint 1 differs to joint 100 in that inner ends 1041 of the braces 104 protrude for a length L₁ through the circumferential wall 1032 of the chord 103. The chord 103 hereto comprises a pair of through holes that are sized and shaped accordingly to the outer dimensions of the braces 104 to accommodate (a clearance fit) of said braces 104 through the through hole. The chord 103 is arranged with respect to each brace 104 at a non-zero angle, as measured between a longitudinal direction III of the chord 103 and a longitudinal axis IV of the brace 104.

The braces 104 and chord 103 are coupled to form the joint 100 by applying, firstly, a pair of internal fibre reinforced polymer wraps 106, wherein each of the respective braces 104 is coupled to the chord 103 by means of an respective internal fibre reinforced wrap 106 that is applied around the, in the current example full, outer circumference 1042 of the brace 104 and that is applied on an inside of, and connected to, an inner side 1033 of the circumferential wall 1032 of the chord.

The internal fibre reinforced polymer wrap 106 is arranged to cover, and connect to, an inner circumferential section 1034 of the inner side of the circumferential wall 1032 that, in the current example, fully surrounds the through hole. The inner circumferential section 1034 surrounding the through hole extends outwardly, with respect to the outer edge of the through hole, or in other words with respect to the outer circumferential surface 1042 of the brace 104, along the inner surface 1033 of the circumferential wall 103 for a length L₄ that is, in the current example equal to about the diameter d₂ of the brace 104. The internal fibre reinforced wrap 106 extends inwardly, with respect to the inner surface 1033, along the outer circumferential surface 1042 of the brace 104 for a length L₂, in the current example about 0.8 times the diameter d2 of the brace 104. The thickness of the wrap is seen to decrease, from a maximum thickness at the intersection of the inner surface 1033 of the chord 103 and the outer circumferential surface 1042 of the brace 104, to respective minima, both in the direction inwardly of the chord along the brace member 104 and along the inner circumferential section 1034, as it extends outwardly along the inner surface 1033 of the chord. The inner fibre reinforced wrap 106 thereby tapers as it extends further from the above described intersection. The tapering prevents sudden discontinuities in stiffness that typically lead to stress hotspots having a high stress concentration factor, which are potential failure points, both in terms of fatigue and ultimate load.

The pair of braces 104 are furthermore coupled to the chord 103 by means of the single external fibre reinforced polymer wrap 105 that is arranged around the, in the current example, full outer circumferential surface 1042 of the braces 104 and around the full outer circumferential surface 1031 of the chord 103. In the current example it is seen that both braces 103 are coupled using a single external fibre reinforced polymer wrap 105. It is however noted, that these can also be coupled using respective (i.e. individual) external fibre reinforced polymer wraps. The external fibre reinforced polymer wrap 105 extends outwardly (with respect to the outer circumferential surface 1031 of the chord 103) along the brace 104 for a length L₃, that is in the current example approximately equal to 1.5 - 2 times the diameter d₂ of the brace 104. In order to prevent stress hotspots, the external fibre reinforced polymer wrap 105 also tapers along the length of the brace 104, such that the thickness of the wrap 105 is seen to decrease, from a maximum thickness at the intersection of the outer circumferential surface 1031 of the chord 103 and the outer circumferential surface 1042 of the brace 104, to a minimum at the end of the wrap 105 in the direction outwardly of the chord 103 along the brace member 104.

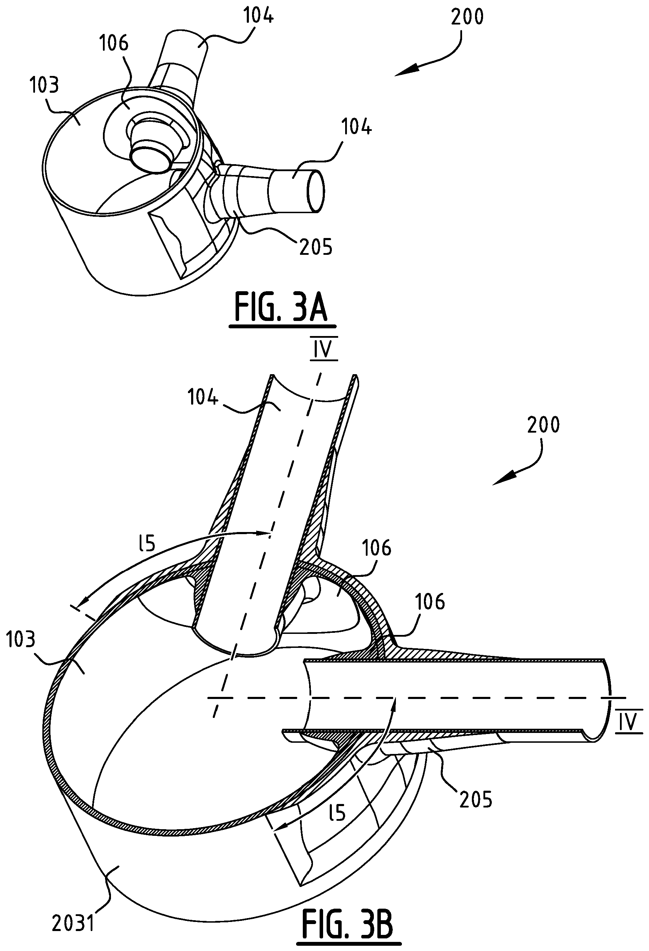

Figures 3A and 3B schematically shows a second embodiment of a structural joint 200 that is substantially equal to the first embodiment of the structural joint 100, with the difference that the outer fibre reinforced polymer wrap 205 does not extend the around the full outer circumferential surface 2031 of the chord 103. Rather, the outer fibre reinforced polymer wrap 205 extends for a length L₅ (as determined from the longitudinal axis IV of the brace 104) along the outer circumferential surface 2031 of the chord 103 in both directions. Length L₅ can, for instance, be defined by a certain ratio between (but not equal to) 0 and 0.5 m that is multiplied by the circumferential length of the chord 103. In the current example this ratio is about 0.125. As the individual external wraps, that extend in both directions for a length L₅ with respect to the respective longitudinal axis IV of the respective brace 104, of the respective braces 104 overlap, a single external wrap 205 is formed.

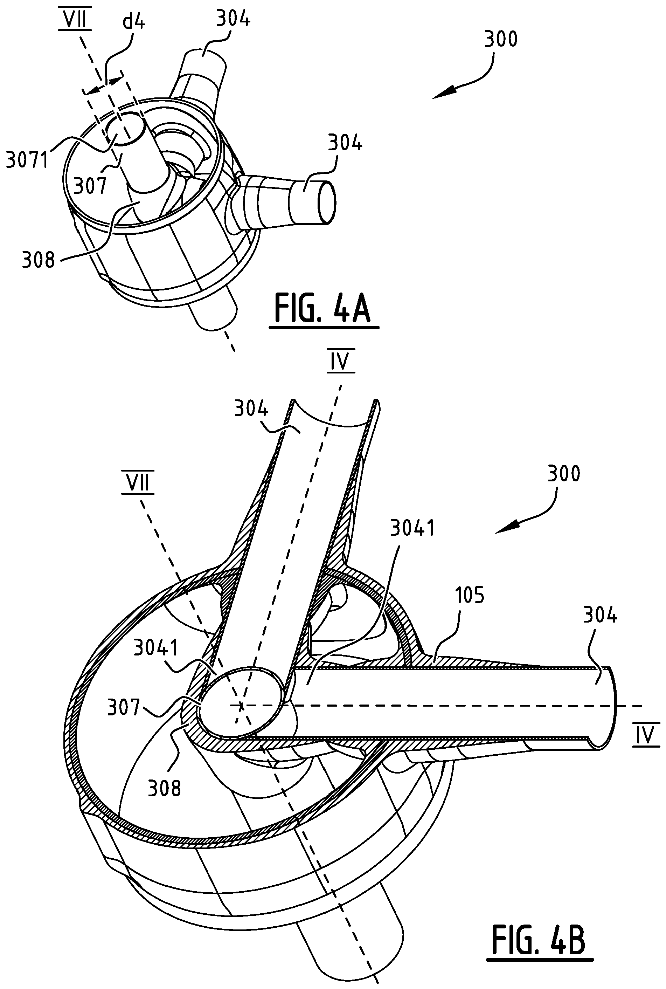

Figures 4A and 4B schematically show a third embodiment of a structural joint 300 that is substantially equal to the first embodiment of the structural joint 100, with the difference that the respective braces 304 are coupled to each other at their inner ends 3041 to further stiffen and strengthen the joint 300 compared to joints 1, 100 and 200. The inner ends 3041 are arranged to protrude further into the chord 103, thereby abutting an auxiliary structural tubular member 307, in particular the outer circumferential surface 3071 of the auxiliary structural tubular member 307 that is arranged substantially coaxially with, and inside of, the chord 103, such that its longitudinal axis VII coincides with the longitudinal axis III of the chord 103. The auxiliary structural tubular member 307 has, in the current example, a circular cross section that is defined by a diameter dₐ that is smaller than the diameter d₁ of the chord. The braces 304, as their respective inner ends 3041, are coupled to each other and to the auxiliary structural member 307 by means of an auxiliary fibre reinforced polymer wrap 308 that is applied around the respective outer circumferential surfaces 3041, 3071.

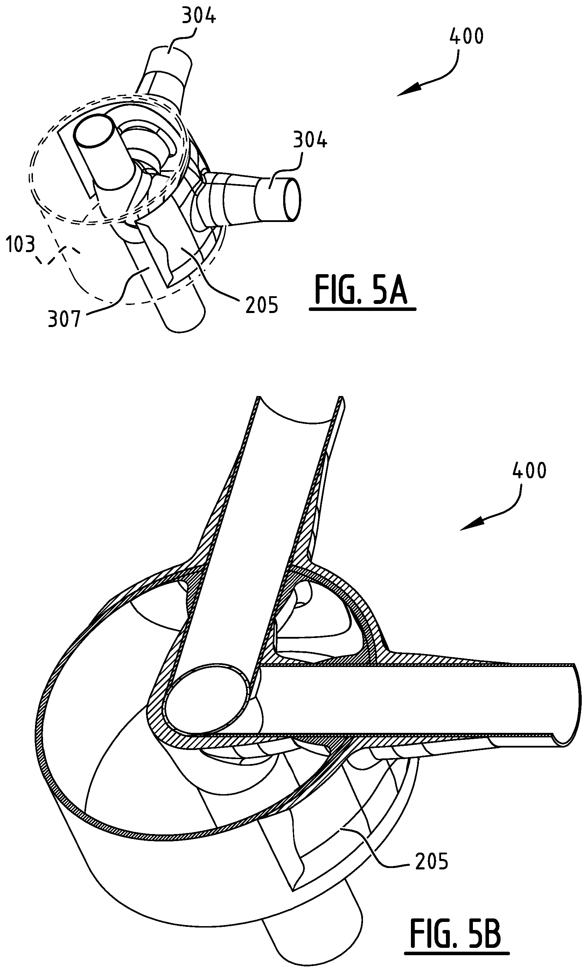

Figures 5A and 5B schematically show a fourth embodiment of a structural joint 400 that is substantially equal to the third embodiment of the structural joint 300, with the difference that it comprises an external fibre reinforced wrap 205 that is substantially equal to the external fibre reinforced polymer wrap 205 of the second embodiment.

A comparison between the embodiments of figures 1A - 5B is made using realistic non-linear finite element simulations. These embodiments, that show the same (external) TT-type joint geometry with ratio between the chord diameter d₁ and brace diameter d₂ of d₂/d₁ = 0.26. The external fibre reinforced polymer wrap 5, 105, 205 in all cases comprises of 8 lamination stages, and thus the main difference between the test cases is the internal fibre reinforced laminations 106 and the auxiliary fibre reinforced laminations 307 added to the structural joints 100 - 400. The exemplary embodiments are loaded under tension at both their braces 4, 104, 304 until total failure. A direct comparison can thereby be made of the structural performance of the respective structural joints 1, 100, 200, 300, 400.

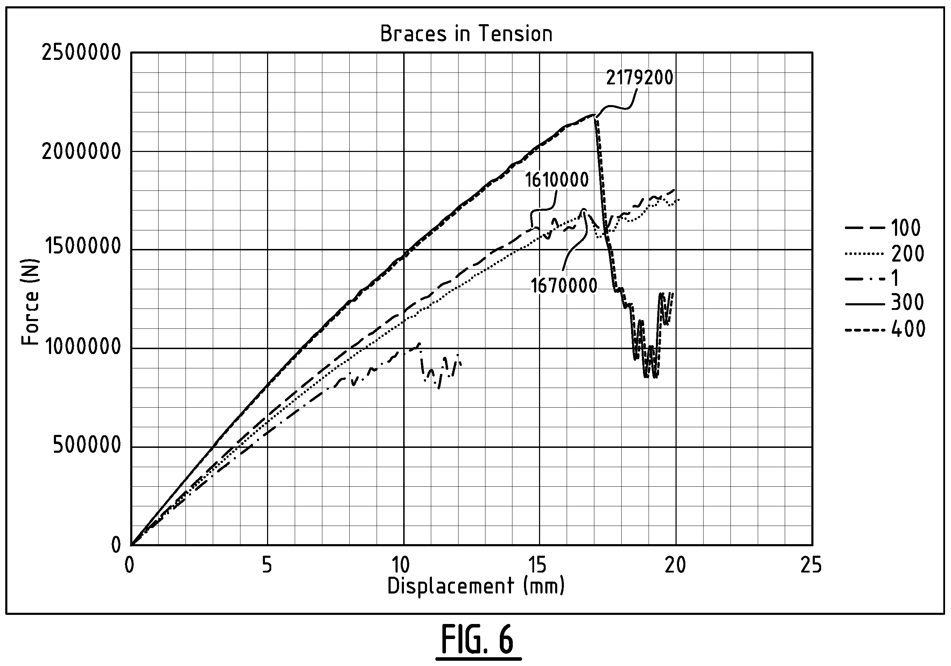

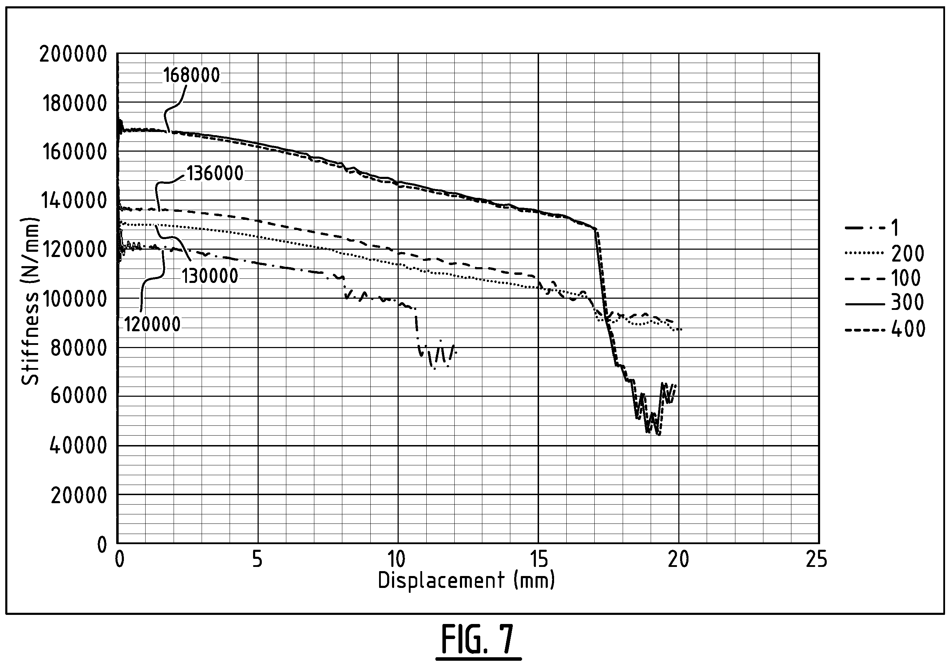

The results of the comparison are shown in the table below and in figures 6 and 7.

| Joint type | Maximum load [kN] | Initial stiffness [N/mm] | Composite weight total [kg] |
|---|---|---|---|
| **Reference structural joint 1** | 1022 | 120000 | 373 |
| **Structural joint 100** | 1670 | 136000 | 489 |
| **Structural joint 200** | 1670 | 130000 | 375 |
| **Structural joint 300** | 2180 | 168000 | 629 |
| **Structural joint 400** | 2180 | 168000 | 514 |

The above tabular comparison shows that there is a lot of potential to optimize such a wrapped fibre reinforced polymer joint, by laminating from the inside of the big diameter column, i.e. the chord. In this case the mass of the external wrap could theoretically be decreased by ½ (joint 100 compared to joint 200) to reach the conventional design material mass, and still present a 60% (joint 1 compared to joint 200) higher maximum capacity.

For the cases where the auxiliary structural tubular member 307, i.e. a vertical inner stiffening member, is used, with a diameter equal to this of the braces the maximum load experiences an increase of more than 100% (joint 1 compare to joint 300) compared to the typical TC joint with only an outer wrap. Comparing this case to the one with the additional internal composite wrap gives a 30% of load increase (joint 300 vs joint 100) for just a 28% increase in composite material weight. Stiffness increase goes up to 24% (joint 300 vs joint 100). Finally using the case of the auxiliary structural tubular member 307 but with a partial external wrap on the outside gives no difference in terms of strength and stiffness compared to the full external wrap alternatives (joint 400 vs joint 300), while giving an 18% decrease in composite weight. This shows that a large increase of the stiffness of joints 300, 400 comes from the auxiliary structural tubular member 307.

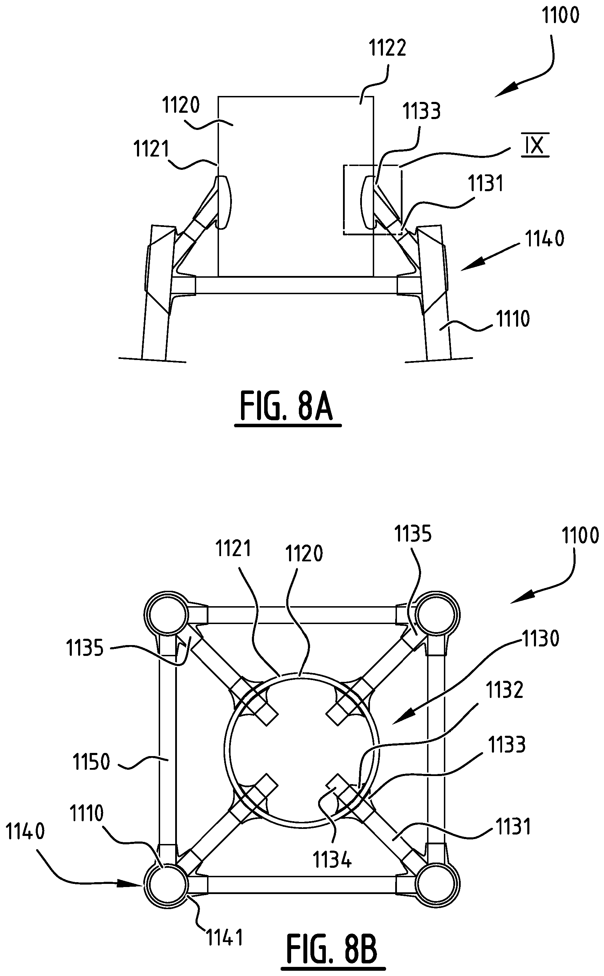

Figures 8A and 8B show a part of a support structure, in particular a transition piece 1100 of a four-legged offshore jacket structure that is to support an offshore wind turbine. As the wind turbine tower, and its bottom section, is formed as a cylinder having a relatively large outer diameter (> 5 meters) and the legs 1110 of the jacket are made from cylindrical structural tubular members having a smaller diameter, but are interspaced at a distance larger than the outer diameter of the bottom section of the wind turbine tower. In order to obtain a stiff and fatigue resistant coupling between the tower and the jacket, the transition piece 1100 is arranged with a structural joint 1130 according to the invention. The structural joint 1130, of which a partial close-up view is given in figure 9, is similar to the structural joint 200 of the second embodiment of figures 3A and 3B.

Transition piece 1100 comprises a first structural (tubular) element 1120, which can, for instance, be a tower bottom section or a separate hollow cylindrical member that is arranged with means for connecting the tower to it, for instance, using a bolted flange connection or so called slip joint connection. Four distinct second structural tubular members 1131 protrude, i.e. their inner ends 1134 extend within the circumference of the first structural member 1120, for a predefined length through the circumferential wall 1121 and each second structural tubular member 1131 is connected to the first structural member 1120 by means of an internal fibre reinforced polymer wrap 1132 and an external fibre reinforced polymer wrap 1133, as was explained in more detail for figures 3A and 3B. Note that the respective external reinforced polymer wrap 1133 is not arranged around the full outer circumference 1122 of the first structural member. At the opposite ends 1135 the second structural members 1131 are connected to the respective legs 1110 using a fibre reinforced polymer wrap 1141, forming, together with leg-interconnecting tubular members 1150 a respective leg joint 1040. Transition piece 1100 thereby couples the legs together and couples a first structural (tubular) element 1120 to which the wind turbine tower is, or can be, coupled.

Figures 10A and 10B show a part of a support structure, in particular a transition piece 2100 of a four-legged offshore jacket structure that is to support an offshore wind turbine. Transition piece 2100 is similar to transition piece 1100, with the difference that a structural joint similar to structural joint 400, as shown in figures 5A and 5B is applied. Hence, the second structural tubular member 2131 extend further inwards in the first structural member 1120 to, at a location near to where the respective longitudinal axis IV, VII intersect, abut an auxiliary structural tubular member 2170 that is arranged as a further internal stiffening member, as was explained before. The inner ends 2134 of the second structural tubular members 2131 and the auxiliary structural tubular member 2170 are coupled using a first auxiliary fibre reinforced polymer wrap 2171. At its lower end 2172, the auxiliary structural tubular member 2170 is coupled, using a second auxiliary fibre reinforced polymer wrap 2181 to a plurality of third structural tubular members 2180 that are coupled to the respective legs 1110 of the jacket. An even further stiffened transition piece 2100 is hereby obtained that has an even further improved fatigue life and can transfer even higher maximum loads before failing.

Figure **11** shows a part of a support structure, in particular a transition piece 3100 of a three-legged offshore jacket structure that is to support an offshore wind turbine. The transition piece 3100 is substantially the same as transition piece 1100, with the difference that it only couples three legs 3110 of the three-legged jacket to the first structural tubular member 1120. Hence, it employs a structural joint substantially similar to structural joint 200 as discussed in relation to figures 3A and 3B.

The present invention is not limited to the embodiment shown, but extends also to other embodiments falling within the scope of the appended claims.

## Claims

1. Structural joint (100, 200, 300, 400, 1130, 2130, 3130) for use in a supporting structure that is subjected to cyclic loading, said structural joint (100, 200, 300, 400, 1130, 2130, 3130) comprising a first structural member (103, 1120) and a second structural tubular member (104, 304, 1131, 2131),
said first structural member (103, 1120) having a first cross section that is, at least partly, defined by a first dimension (d1), such as a width, height or diameter, wherein said first dimension (d1) is the largest dimension of said first cross section;
said second structural tubular member (104, 304, 1131, 2131) having a second cross section that is, at least partly, defined by a second dimension (d2), such as a width, height or diameter, wherein said second dimension (d2) is the largest dimension of said second cross section, wherein said first dimension (d1) is larger than said second dimension (d2);
wherein said structural members are arranged with respect to each other at a non-zero angle, as measured between a longitudinal direction (III) of the first structural member (103, 1120) and a longitudinal axis (IV) of the second structural tubular member (104, 304, 1131, 2131), and wherein said second structural tubular member (104, 304, 1131, 2131) protrudes a wall section of the first structural member (103, 1120), wherein said first structural member (103, 1120) and said second structural tubular member (104, 304, 1131, 2131) are interconnected by means of an internal fibre reinforced polymer wrap (106, 1132) that is applied around the, preferably full, outer circumference (1042) of the second structural tubular member (104, 304, 1131, 2131) and that is applied on an inside of, and connected to, an inner side (1033) of the wall section of the first structural member (103, 1120).

2. Structural joint (100, 200, 300, 400, 1130, 2130, 3130) according to claim 1, wherein said first structural member (103, 1120) is a first structural tubular member having a circumferential wall (1032, 1121) around a longitudinal axis (III) of first structural tubular member, wherein the non-zero angle is measured between the respective longitudinal axis (III, IV) of the respective first and second structural tubular members and wherein said inner side (1033) of the wall section is formed by the inner circumferential surface of the circumferential wall (1032, 1121) of the first structural tubular member.

3. Structural joint (100, 200, 300, 400, 1130, 2130, 3130) according to claim 1 or 2, wherein said first structural member (103, 1120) comprises a through hole that is arranged through the wall section of the first structural member (103, 1120);
wherein said internal fibre reinforced polymer wrap (106, 1132) is arranged to cover, and connect to, an inner circumferential section (1034) of the inner side (1033) of the wall section that, preferably fully, surrounds the through hole;
preferably wherein said through hole is shaped to correspond to the first cross section allowing a clearance fit of the second structural tubular member (104, 304, 1131, 2131), at the non-zero angle, through said through hole;
preferably wherein said inner circumferential section (1034) surrounding the through hole extends outwardly, with respect to the outer edge of the through hole, along the inner side (1033) of the wall section for a length (L4) that is at least 0.1 times the second dimension (d2), preferably at least 0.25 times the second dimension (d2), more preferably at least 0.5 times the second dimension (d2), even more preferably at least 1 times the second dimension (d2), most preferably at least 1.5 times the second dimension (d2); and/or wherein the inner circumferential section (1034) surrounding the through hole extends outwardly, with respect to the outer edge of the through hole, along the inner side (1033) of the wall section for a length (L4) that is no more than 10 times the second dimension (d2), preferably no more than 5 times the second dimension (d2), more preferably no more than 3 times the second dimension (d2), most preferably no more than 2 times the second dimension (d2); and/or wherein the inner circumferential section (1034) does not extend the full inner circumference of the first structural member (103, 1120), more preferably does not extend half the inner circumference of the first structural member (103, 1120).

4. Structural joint (100, 200, 300, 400, 1130, 2130, 3130) according to any of the preceding claims, further comprising an external fibre reinforced polymer wrap (105, 205, 1133) that is applied on an outside of, and connected to, an outer side (1031) of the wall section of the first structural member (103, 1120), in particular that is applied around the, preferably full, outer circumference (1031) of the first structural tubular member, and that is arranged outside of, and connected to, the, preferably full, outer circumference (1042) of the second structural tubular member (104, 304, 1131, 2131),
preferably wherein said external fibre reinforced polymer wrap (105, 205, 1133) is arranged as follows:
said external fibre reinforced polymer wrap (105, 205, 1133) is arranged to cover, and connect to, an outer circumferential section of the outer circumference (1031) that, preferably fully, surrounds the through hole;
wherein said outer circumferential section surrounding the through hole extends outwardly, with respect to the outer edge of the through hole, along the outer side (1031) of the wall section for a length (L5) that is at least 0.1 times the second dimension (d2), preferably at least 0.25 times the second dimension (d2), more preferably at least 0.5 times the second dimension (d2), even more preferably at least 1 times the second dimension (d2), most preferably at least 1.5 times the second dimension (d2); and/or
wherein the outer circumferential section surrounding the through hole extends outwardly, with respect to the outer edge of the through hole, along the outer side (1031) of the wall section for a length (L5) that is no more than 10 times the second dimension (d2), preferably no more than 5 times the second dimension (d2), more preferably no more than 3 times the second dimension (d2), most preferably no more than 2 times the second dimension (d2); and/or
wherein the outer circumferential section does not extend the full outer circumference (1122) of the first structural member (103, 1120), more preferably does not extend beyond half the outer circumference of the first structural member (103, 1120).

5. Structural joint (100, 200, 300, 400, 1130, 2130, 3130) according to any of the preceding claims, further comprising a plurality of second structural tubular members (104, 304, 1131, 2131), each of said plurality of second structural tubular member (104, 304, 1131, 2131) having a respective second cross section that is, at least partly, defined by a respective second dimension (d2), such as a width, height or diameter, wherein each respective second dimension (d2) is the largest dimension of said respective second cross section of the respective second structural tubular member;
wherein said first structural member (103, 1120) and each of the plurality of second structural tubular members (104, 304, 1131, 2131) are arranged with respect to each other at non-zero angles, as measured between the longitudinal direction (III) of the first structural member (103, 1120) and the respective longitudinal axis (IV) of the respective second structural tubular member of the plurality of second structural tubular members (104, 304, 1131, 2131), and wherein the respective second structural tubular member of the plurality of second structural tubular members (104, 304, 1131, 2131) protrudes, preferably through a respective accordingly shaped second through hole, the wall section of the first structural member (103, 1120);
wherein said first structural member (103, 1120) and each respective second structural tubular member of the plurality of second structural tubular members (104, 304, 1131, 2131) are interconnected by means of an internal fibre reinforced polymer wrap (106, 1132), preferably by means of a corresponding plurality of internal fibre reinforced polymer wraps (106, 1132), that is applied around the, preferably full, outer circumference (1042) of the respective second structural tubular member of the plurality of second structural tubular members (104, 304, 1131, 2131) and that is applied on the inside of, and connected to, the inner side (1033) of the wall section of the first structural member (103, 1120).

6. Structural joint (300, 400, 2130) according to claim 5, wherein at least two second structural tubular members (304, 2131) of the plurality of second structural tubular members (104, 304, 1131, 2131) are coupled at the respective inner ends (1041, 1134, 2134, 3041) that protrude into the first structural member (103, 1120),
preferably wherein the at least two second structural tubular members (304, 2131) of the plurality of second structural tubular members (104, 304, 1131, 2131) are coupled using an auxiliary fibre reinforced polymer wrap (308, 2171) that is applied around the, preferably full, outer circumference of the inner ends (2134, 3041) of each of the at least two second tubular structural members of the plurality of second structural tubular members (104, 304, 1131, 2131) for interconnecting the at least two second structural tubular members (304, 2131) of the plurality of second structural tubular members (104, 304, 1131, 2131).

7. Structural joint (300, 400, 2130) according to claim 6, further comprising an auxiliary structural tubular member (307, 2170), wherein said member is, preferably coaxially, arranged inside of, and preferably parallel to, the first structural member (103, 1120); said auxiliary structural tubular member (307, 2170) having a cross section that is, at least partly, defined by a dimension (da), such as a width, height or diameter, wherein said dimension (da) is the largest dimension of said cross section of the auxiliary structural tubular member (307, 2170), wherein said dimension (da) of the auxiliary structural tubular member (307, 2170) is smaller than the first dimension (d1);
wherein the auxiliary structural member (307, 2170) is arranged such that its longitudinal axis (VII) preferably intersects with the respective longitudinal axis (IV) of at least one of the at least two second structural tubular members (304, 2131) of the plurality of second structural tubular members (104, 304, 1131, 2131); and
wherein the inner ends (2134, 3041) of the at least two second structural tubular members (304, 2131) of the plurality of second structural tubular members (104, 304, 1131, 2131) are coupled to the auxiliary structural tubular member (307, 2170).

8. Structural joint (300, 400, 2130) according to claim 6 and 7, wherein the auxiliary fibre reinforced polymer wrap (308, 2171) is also applied around the, preferably full, outer circumference (3071) of the auxiliary tubular member (307, 2170) for coupling the at least two second structural tubular members (304, 2131) of the plurality of second structural tubular members (104, 304, 1131, 2131) at their inner ends (2134, 3041) to the auxiliary structural tubular member (307, 2170).

9. Structural joint (100, 200, 300, 400, 1130, 2130, 3130) according to any of the preceding claims, wherein a non-zero ratio of the second dimension (d2) over the first dimension (d1) is no more than 0.83, preferably no more than 0.5, more preferably no more than 0.33, even more preferably no more than 0.25, most preferably no more than 0.1; and/or wherein said first structural tubular member is a chord (103) member and said second structural tubular member is a brace (104, 304) member of a truss structure.

10. Structural joint (100, 200, 300, 400, 1130, 2130, 3130) according to any of the preceding claims, wherein said structural members are made of metal, in particular steel, more in particular structural grade steel, a composite material, in particular a fibre reinforced composite material, such as a carbon fibre reinforced and/or glass fibre reinforced composite material, or a combination of these.

11. Structural joint (100, 200, 300, 400, 1130, 2130, 3130) according to any of the preceding claims, wherein the internal and/or external fibre reinforced polymer wrap (105, 106, 205, 1132, 1133) has a length (L2, L3) in the longitudinal direction (IV) of the second structural tubular member (104, 304, 1131, 2131) which is in the range of 0.1-10 times, preferably 0.5-5, more preferably 0.75 - 4, even more preferably 1 - 3, most preferably 1.5 - 2.5 times the second dimension (d2) of the second structural tubular member (104, 304, 1131, 2131).

12. Structural joint (100, 200, 300, 400, 1130, 2130, 3130) according to any of the preceding claims, wherein the internal and/or external fibre reinforced polymer wrap (105, 106, 205, 1132, 1133) has a thickness measured transversely to the longitudinal direction (IV) of the second structural tubular member (104, 304, 1131, 2131), that is preferably in the range of 0.5 - 10, more preferably 0.75 - 5, even more preferably 1 - 4, most preferably 1.5 - 3 times the thickness of the circumferential wall (1032, 1121) of the second structural tubular member (104, 304, 1131, 2131); and/or
wherein the internal and/or external fibre reinforced polymer wrap (105, 106, 205, 1132, 1133) comprises a tapered section that tapers, in a longitudinal direction (IV) of second structural tubular member (104, 304, 1131, 2131) away from the circumferential wall (1032, 1121) of the first structural member (103, 1120), from a maximum thickness towards a minimum thickness of said tapered section.

13. Supporting structure comprising a structural joint (100, 200, 300, 400, 1130, 2130, 3130) according to any of the preceding claims, in particular an offshore supporting structure, comprising, for instance, a sea-bottom fixed multi-membered foundation structure or a floating foundation structure, for supporting an object, such as an offshore platform or wind turbine, wherein said structural joint (100, 200, 300, 400, 1130, 2130, 3130) is arranged for coupling a first support structure section comprising the first structural member (103, 1120) and a second support structure section comprising the second structural tubular member (104, 304, 1131, 2131).

14. Transition piece (1100, 2100, 3100) for use in an offshore support structure for an offshore wind turbine, wherein said transition piece (1100, 2100, 3100) comprises a structural joint (100, 200, 300, 400, 1130, 2130, 3130) according to any of the preceding claims 1 - 12, and wherein said transition piece (1100, 2100, 3100) is arranged for coupling a bottom of a tower of the wind turbine to an upper end of an offshore foundation structure, such as a monopile foundation, tripod foundation, jacket foundation, semi-submersible floating foundation, buoy floating foundation or tension leg platform (TLP) floating foundation, or a combination of these.

15. Method of manufacturing a structural joint (100, 200, 300, 400, 1130, 2130, 3130) according to any of the preceding claim 1 - 12, comprising the steps of:
- providing the first structural member (103, 1120) and second structural tubular member (104, 304, 1131, 2131);
- protruding said second structural tubular member (104, 304, 1131, 2131) at a non-zero angle, as measured between a longitudinal direction (III) of the first structural member (103, 1120) and a longitudinal axis (IV) of the second structural tubular member (104, 304, 1131, 2131), through a wall section of the first structural member (103, 1120);
- holding said structural members to remain protruded at the non-zero angle, optionally providing a temporary and/or auxiliary fixation for holding said structural members with respect to each other at the non-zero angle;
- applying an internal fibre reinforced polymer wrap (106, 1132) around the, preferably full, outer circumference (1042) of the second structural tubular member (104, 304, 1131, 2131) and on an inside of, such that is connected to, an inner side (1033) of the wall section of the first structural member (103, 1120) for interconnecting the first structural member (103, 1120) and second structural tubular member (104, 304, 1131, 2131).

## Patentansprüche

1. Strukturverbindung (100, 200, 300, 400, 1130, 2130, 3130) zur Verwendung in einer Tragstruktur, die zyklischer Belastung ausgesetzt ist, wobei die Strukturverbindung (100, 200, 300, 400, 1130, 2130, 3130) ein erstes Strukturelement (103, 1120) und ein zweites rohrförmiges Strukturelement (104, 304, 1131, 2131) umfasst,
wobei das erste Strukturelement (103, 1120) einen ersten Querschnitt aufweist, der mindestens teilweise durch eine erste Abmessung (d1) wie eine Breite, eine Höhe oder einen Durchmesser definiert ist, wobei die erste Abmessung (d1) die größte Abmessung des ersten Querschnitts ist;
wobei das zweite rohrförmige Strukturelement (104, 304, 1131, 2131) einen zweiten Querschnitt aufweist, der mindestens teilweise durch eine zweite Abmessung (d2) wie eine Breite, eine Höhe oder einen Durchmesser definiert ist, wobei die zweite Abmessung (d2) die größte Abmessung des zweiten Querschnitts ist, wobei die erste Abmessung (d1) größer als die zweite Abmessung (d2) ist;
wobei die Strukturelemente unter einem Winkel ungleich Null zueinander angeordnet sind, gemessen zwischen einer Längsrichtung (III) des ersten Strukturelements (103, 1120) und einer Längsachse (IV) des zweiten rohrförmigen Strukturelements (104, 304, 1131, 2131), und wobei das zweite rohrförmige Strukturelement (104, 304, 1131, 2131) aus einem Wandabschnitt des ersten Strukturelements (103, 1120) herausragt, wobei das erste Strukturelement (103, 1120) und das zweite rohrförmige Strukturelement (104, 304, 1131, 2131) mittels einer inneren faserverstärkten Polymerummantelung (106, 1132) miteinander verbunden sind, die um den vorzugsweise vollständigen Außenumfang (1042) des zweiten rohrförmigen Strukturelements (104, 304, 1131, 2131) herum angebracht ist und die innerhalb einer Innenseite (1033) des Wandabschnitts des ersten Strukturelements (103, 1120) angebracht und mit dieser verbunden ist.

2. Strukturverbindung (100, 200, 300, 400, 1130, 2130, 3130) nach Anspruch 1, wobei das erste Strukturelement (103, 1120) ein erstes rohrförmiges Strukturelement ist, das eine Umfangswand (1032, 1121) um eine Längsachse (III) des ersten rohrförmigen Strukturelements aufweist, wobei der Winkel ungleich Null zwischen der jeweiligen Längsachse (III, IV) des jeweiligen ersten und zweiten rohrförmigen Strukturelements gemessen wird und wobei die Innenseite (1033) des Wandabschnitts durch die Innenumfangsoberfläche der Umfangswand (1032, 1121) des ersten rohrförmigen Strukturelements gebildet wird.

3. Strukturverbindung (100, 200, 300, 400, 1130, 2130, 3130) nach Anspruch 1 oder 2, wobei das erste Strukturelement (103, 1120) ein Durchgangsloch umfasst, das durch den Wandabschnitt des ersten Strukturelements (103, 1120) verläuft;
wobei die innere faserverstärkte Polymerumhüllung (106, 1132) so angeordnet ist, dass sie einen das Durchgangsloch vorzugsweise vollständig umgebenden Innenumfangsabschnitt (1034) der Innenseite (1033) des Wandabschnitts abdeckt und mit diesem verbunden ist;
wobei das Durchgangsloch vorzugsweise so geformt ist, dass es dem ersten Querschnitt entspricht, was eine Spielpassung des zweiten rohrförmigen Strukturelements (104, 304, 1131, 2131) unter dem Winkel ungleich Null durch das Durchgangsloch ermöglicht;
wobei sich vorzugsweise der Innenumfangsabschnitt (1034), der das Durchgangsloch umgibt, in Bezug zum Außenrand des Durchgangslochs entlang der Innenseite (1033) des Wandabschnitts über eine Länge (L4) nach außen erstreckt, die mindestens das 0,1-Fache der zweiten Abmessung (d2), vorzugsweise mindestens das 0,25-Fache der zweiten Abmessung (d2), mehr bevorzugt mindestens das 0,5-Fache der zweiten Abmessung (d2), noch mehr bevorzugt mindestens das 1-Fache der zweiten Abmessung (d2), am meisten bevorzugt mindestens das 1,5-Fache der zweiten Abmessung (d2) beträgt; und/oder wobei sich der das Durchgangsloch umgebende Innenumfangsabschnitt (1034) in Bezug zum Außenrand des Durchgangslochs entlang der Innenseite (1033) des Wandabschnitts über eine Länge (L4) nach außen erstreckt, die nicht mehr als das 10-Fache der zweiten Abmessung (d2), vorzugsweise nicht mehr als das 5-Fache der zweiten Abmessung (d2), mehr bevorzugt nicht mehr als das 3-Fache der zweiten Abmessung (d2), am meisten bevorzugt nicht mehr als das 2-Fache der zweiten Abmessung (d2) beträgt; und/oder wobei sich der Innenumfangsabschnitt (1034) nicht über den vollständigen Innenumfang des ersten Strukturelements (103, 1120) erstreckt, mehr bevorzugt sich nicht über die Hälfte des Innenumfangs des ersten Strukturelements (103, 1120) erstreckt.

4. Strukturverbindung (100, 200, 300, 400, 1130, 2130, 3130) nach einem der vorstehenden Ansprüche, ferner umfassend eine äußere faserverstärkte Polymerumhüllung (105, 205, 1133), die außerhalb einer Außenseite (1031) des Wandabschnitts des ersten Strukturelements (103, 1120) angebracht und mit dieser verbunden ist, die insbesondere um den vorzugsweise vollständigen Außenumfang (1031) des ersten rohrförmigen Strukturelements herum angebracht ist und die außerhalb des vorzugsweise vollständigen Außenumfangs (1042) des zweiten rohrförmigen Strukturelements (104, 3 04, 1131, 2131) angeordnet und mit diesem verbunden ist,
wobei die äußere faserverstärkte Polymerumhüllung (105, 205, 1133) vorzugsweise wie folgt angeordnet ist:
die äußere faserverstärkte Polymerumhüllung (105, 205, 1133) ist so angeordnet, dass sie einen Außenumfangsabschnitt des Außenumfangs (1031), der das Durchgangsloch vorzugsweise vollständig umgibt, abdeckt und mit diesem verbunden ist;
wobei sich der Außenumfangsabschnitt, der das Durchgangsloch umgibt, in Bezug zum Außenrand des Durchgangslochs entlang der Außenseite (1031) des Wandabschnitts über eine Länge (L5) nach außen erstreckt, die mindestens das 0,1-Fache der zweiten Abmessung (d2), vorzugsweise mindestens das 0,25-Fache der zweiten Abmessung (d2), mehr bevorzugt mindestens das 0,5-Fache der zweiten Abmessung (d2), noch mehr bevorzugt mindestens das 1-Fache der zweiten Abmessung (d2), am meisten bevorzugt mindestens das 1,5-Fache der zweiten Abmessung (d2) beträgt; und/oder
wobei sich der das Durchgangsloch umgebende Außenumfangsabschnitt in Bezug zum Außenrand des Durchgangslochs entlang der Außenseite (1031) des Wandabschnitts über eine Länge (L5) nach außen erstreckt, die nicht mehr als das 10-Fache der zweiten Abmessung (d2), vorzugsweise nicht mehr als das 5-Fache der zweiten Abmessung (d2), mehr bevorzugt nicht mehr als das 3-Fache der zweiten Abmessung (d2), am meisten bevorzugt nicht mehr als das 2-Fache der zweiten Abmessung (d2) beträgt; und/oder
wobei sich der Außenumfangsabschnitt nicht über den vollständigen Außenumfang (1122) des ersten Strukturelements (103, 1120) erstreckt, sich mehr bevorzugt nicht über die Hälfte des Außenumfangs des ersten Strukturelements (103, 1120) hinaus erstreckt.

5. Strukturverbindung (100, 200, 300, 400, 1130, 2130, 3130) nach einem der vorstehenden Ansprüche, ferner umfassend eine Vielzahl von zweiten rohrförmigen Strukturelementen (104, 304, 1131, 2131), wobei jedes der Vielzahl von zweiten rohrförmigen Strukturelementen (104, 304, 1131, 2131) einen jeweiligen zweiten Querschnitt aufweist, der mindestens teilweise durch eine jeweilige zweite Abmessung (d2) wie eine Breite, eine Höhe oder einen Durchmesser definiert ist, wobei jede jeweilige zweite Abmessung (d2) die größte Abmessung des jeweiligen zweiten Querschnitts des jeweiligen zweiten rohrförmigen Strukturelements ist;
wobei das erste Strukturelement (103, 1120) und jedes der Vielzahl von zweiten rohrförmigen Strukturelementen (104, 304, 1131, 2131) unter Winkeln ungleich Null zueinander angeordnet sind, gemessen zwischen der Längsrichtung (III) des ersten Strukturelements (103, 1120) und der jeweiligen Längsachse (IV) des jeweiligen zweiten rohrförmigen Strukturelements der Vielzahl von zweiten rohrförmigen Strukturelementen (104, 304, 1131, 2131), und wobei das jeweilige zweite rohrförmige Strukturelement der Vielzahl von zweiten rohrförmigen Strukturelementen (104, 304, 1131, 2131) vorzugsweise durch ein jeweiliges entsprechend geformtes zweites Durchgangsloch aus dem Wandabschnitt des ersten Strukturelements (103, 1120) herausragt;
wobei das erste Strukturelement (103, 1120) und jedes jeweilige zweite rohrförmige Strukturelement der Vielzahl von zweiten rohrförmigen Strukturelementen (104, 304, 1131, 2131) mittels einer inneren faserverstärkten Polymerumhüllung (106, 1132) miteinander verbunden sind, vorzugsweise mittels einer entsprechenden Vielzahl von inneren faserverstärkten Polymerumhüllungen (106, 1132), die um den vorzugsweise vollständigen Außenumfang (1042) des jeweiligen zweiten rohrförmigen Strukturelements der Vielzahl von zweiten rohrförmigen Strukturelementen (104, 304, 1131, 2131) angebracht ist und die innerhalb der Innenseite (1033) des Wandabschnitts des ersten Strukturelements (103, 1120) angebracht und damit verbunden ist.

6. Strukturverbindung (300, 400, 2130) nach Anspruch 5, wobei mindestens zwei zweite rohrförmige Strukturelemente (304, 2131) der Vielzahl von zweiten rohrförmigen Strukturelementen (104, 304, 1131, 2131) an die jeweiligen inneren Enden (1041, 1134, 2134, 3041) gekoppelt sind, die in das erste Strukturelement (103, 1120) hineinragen,
wobei vorzugsweise die mindestens zwei zweiten rohrförmigen Strukturelemente (304, 2131) der Vielzahl von zweiten rohrförmigen Strukturelementen (104, 304, 1131, 2131) unter Verwendung einer zusätzlichen faserverstärkten Polymerumhüllung (308,
2171) gekoppelt sind, die um den vorzugsweise vollständigen Außenumfang der inneren Enden (2134, 3041) jedes der mindestens zwei zweiten rohrförmigen Strukturelemente der Vielzahl von zweiten rohrförmigen Strukturelementen (104, 304, 1131, 2131) herum angebracht ist, um die mindestens zwei zweiten rohrförmigen Strukturelemente (304, 2131) der Vielzahl von zweiten rohrförmigen Strukturelementen (104, 304, 1131, 2131) miteinander zu verbinden.

7. Strukturverbindung (300, 400, 2130) nach Anspruch 6, ferner umfassend ein zusätzliches rohrförmiges Strukturelement (307, 2170), wobei das Element vorzugsweise koaxial innerhalb des ersten Strukturelements (103, 1120) und vorzugsweise parallel zu diesem angeordnet ist; wobei das zusätzliche rohrförmige Strukturelement (307, 2170) einen Querschnitt aufweist, der mindestens teilweise durch eine Abmessung (da) wie eine Breite, eine Höhe oder einen Durchmesser definiert ist, wobei die Abmessung (da) die größte Abmessung des Querschnitts des zusätzlichen rohrförmigen Strukturelements (307, 2170) ist, wobei die Abmessung (da) des zusätzlichen rohrförmigen Strukturelements (307, 2170) kleiner als die erste Abmessung (d1) ist;
wobei das zusätzliche Strukturelement (307, 2170) so angeordnet ist, dass seine Längsachse (VII) vorzugsweise die jeweilige Längsachse (IV) von mindestens einem der mindestens zwei zweiten rohrförmigen Strukturelemente (304, 2131) der Vielzahl von zweiten rohrförmigen Strukturelementen (104, 304, 1131, 2131) schneidet; und
wobei die inneren Enden (2134, 3041) der mindestens zwei zweiten rohrförmigen Strukturelemente (304, 2131) der Vielzahl von zweiten rohrförmigen Strukturelementen (104, 304, 1131, 2131) mit dem zusätzlichen rohrförmigen Strukturelement (307, 2170) gekoppelt sind.

8. Strukturverbindung (300, 400, 2130) nach Anspruch 6 und 7, wobei die zusätzliche faserverstärkte Polymerumhüllung (308, 2171) auch um den vorzugsweise vollständigen Außenumfang (3071) des zusätzlichen rohrförmigen Elements (307, 2170) angebracht ist, um die mindestens zwei zweiten rohrförmigen Strukturelemente (304, 2131) der Vielzahl von zweiten rohrförmigen Strukturelementen (104, 304, 1131, 2131) an ihren inneren Enden (2134, 3041) mit dem zusätzlichen rohrförmigen Strukturelement (307, 2170) zu koppeln.

9. Strukturverbindung (100, 200, 300, 400, 1130, 2130, 3130) nach einem der vorstehenden Ansprüche, wobei ein Verhältnis ungleich Null der zweiten Abmessung (d2) zu der ersten Abmessung (d1) nicht mehr als 0,83, vorzugsweise nicht mehr als 0,5, mehr bevorzugt nicht mehr als 0,33, noch mehr bevorzugt nicht mehr als 0,25, am meisten bevorzugt nicht mehr als 0,1 beträgt; und/oder wobei das erste rohrförmige Strukturelemente ein Gurtelement (103) ist und das zweite rohrförmige Strukturelemente ein Stützelement (104, 304) einer Fachwerkstruktur ist.

10. Strukturverbindung (100, 200, 300, 400, 1130, 2130, 3130) nach einem der vorstehenden Ansprüche, wobei die Strukturelemente aus Metall, insbesondere Stahl, insbesondere Baustahl, einem Verbundwerkstoff, insbesondere einem faserverstärkten Verbundwerkstoff wie einem kohlenstofffaserverstärkten und/oder glasfaserverstärkten Verbundwerkstoff oder einer Kombination davon hergestellt sind.

11. Strukturverbindung (100, 200, 300, 400, 1130, 2130, 3130) nach einem der vorstehenden Ansprüche, wobei die innere und/oder äußere faserverstärkte Polymerumhüllung (105, 106, 205, 1132, 1133) eine Länge (L2, L3) in der Längsrichtung (IV) des zweiten rohrförmigen Strukturelements (104, 304, 1131, 2131) aufweist, die im Bereich des 0,1- bis 10-Fachen, vorzugsweise 0,5- bis 5-Fachen, mehr bevorzugt 0,75- bis 4-Fachen, noch mehr bevorzugt 1- bis 3-Fachen, am meisten bevorzugt 1,5- bis 2,5-Fachen der zweiten Abmessung (d2) des zweiten rohrförmigen Strukturelements (104, 304, 1131, 2131) liegt.

12. Strukturverbindung (100, 200, 300, 400, 1130, 2130, 3130) nach einem der vorstehenden Ansprüche, wobei die innere und/oder äußere faserverstärkte Polymerumhüllung (105, 106, 205, 1132, 1133) eine quer zur Längsrichtung (IV) des zweiten rohrförmigen Strukturelements (104, 304, 1131, 2131) gemessene Dicke aufweist, die vorzugsweise im Bereich des 0,5- bis 10-Fachen, mehr bevorzugt 0,75- bis 5-Fachen, noch mehr bevorzugt 1- bis 4-Fachen, am meisten bevorzugt 1,5- bis 3-Fachen der Dicke der Umfangswand (1032, 1121) des zweiten rohrförmigen Strukturelements (104, 304, 1131, 2131) liegt; und/oder
wobei die innere und/oder äußere faserverstärkte Polymerumhüllung (105, 106, 205, 1132, 1133) einen sich verjüngenden Abschnitt umfasst, der sich in einer Längsrichtung (IV) des zweiten rohrförmigen Strukturelements (104, 304, 1131, 2131) weg von der Umfangswand (1032, 1121) des ersten Strukturelements (103, 1120) von einer maximalen Dicke zu einer minimalen Dicke des sich verjüngenden Abschnitts verjüngt.

13. Tragstruktur, umfassend eine Strukturverbindung (100, 200, 300, 400, 1130, 2130, 3130) nach einem der vorstehenden Ansprüche, insbesondere eine Offshore-Tragstruktur, umfassend zum Beispiel eine am Meeresboden befestigte Fundamentstruktur aus mehreren Elementen oder eine schwimmende Fundamentstruktur, zum Tragen eines Objekts wie einer Offshore-Plattform oder Windkraftanlage, wobei die Strukturverbindung (100, 200, 300, 400, 1130, 2130, 3130) angeordnet ist, um einen ersten Tragstrukturabschnitt, der das erste Strukturelement (103, 1120) umfasst, und einen zweiten Tragstrukturabschnitt, der das zweite rohrförmige Strukturelement (104, 304, 1131, 2131) umfasst, zu koppeln.

14. Übergangsstück (1100, 2100, 3100) zur Verwendung in einer Offshore-Tragstruktur für eine Offshore-Windkraftanlage, wobei das Übergangsstück (1100, 2100, 3100) eine Strukturverbindung (100, 200, 300, 400, 1130, 2130, 3130) nach einem der vorstehenden Ansprüche 1 bis 12 umfasst und wobei das Übergangsstück (1100, 2100, 3100) zum Koppeln einer Unterseite eines Turms der Windkraftanlage mit einem oberen Ende einer Offshore-Fundamentstruktur wie einem Monopile-Fundament, Tripod-Fundament, Jacket-Fundament, halbtauchenden schwimmenden Fundament, schwimmenden Bojen-Fundament oder schwimmenden Spannbeinplattform-Fundament (TLP-Fundament) oder einer Kombination davon angeordnet ist.

15. Verfahren zum Herstellen einer Strukturverbindung (100, 200, 300, 400, 1130, 2130, 3130) nach einem der vorstehenden Ansprüche 1 bis 12, umfassend die Schritte:
- Bereitstellen des ersten Strukturelements (103, 1120) und zweiten rohrförmigen Strukturelements (104, 304, 1131, 2131);
- wobei das zweite rohrförmige Strukturelement (104, 304, 1131, 2131) unter einem Winkel ungleich Null, gemessen zwischen einer Längsrichtung (III) des ersten Strukturelements (103, 1120) und einer Längsachse (IV) des zweiten rohrförmigen Strukturelements (104, 304, 1131, 2131), durch einen Wandabschnitt des ersten Strukturelements (103, 1120) hindurchragt;
- Halten der Strukturelemente, so dass sie unter dem Winkel ungleich Null herausragend bleiben, optional Bereitstellen einer temporären und/oder zusätzlichen Fixierung, um die Strukturelemente unter dem Winkel ungleich Null zueinander zu halten;
- Anbringen einer inneren faserverstärkten Polymerumhüllung (106, 1132) um den vorzugsweise vollständigen Außenumfang (1042) des zweiten rohrförmigen Strukturelements (104, 3 04, 1131, 2131) herum und innerhalb einer Innenseite (1033) des Wandabschnitts des ersten Strukturelements (103, 1120), so dass sie mit dieser verbunden ist, um das erste Strukturelement (103, 1120) und das zweite rohrförmige Strukturelement (104, 304, 1131, 2131) miteinander zu verbinden.

## Revendications

1. Joint structurel (100, 200, 300, 400, 1130, 2130, 3130) destiné à être utilisé dans une structure de support qui est soumise à une charge cyclique, ledit joint structurel (100, 200, 300, 400, 1130, 2130, 3130) comprenant un premier élément structurel (103, 1120) et un second élément tubulaire structurel (104, 304, 1131, 2131),
ledit premier élément structurel (103, 1120) ayant une première section transversale qui est, au moins en partie, définie par une première dimension (d1), telle qu'une largeur, une hauteur ou un diamètre, dans lequel ladite première dimension (d1) est la plus grande dimension de ladite première section transversale ;
ledit second élément tubulaire structurel (104, 304, 1131, 2131) ayant une seconde section transversale qui est, au moins en partie, définie par une seconde dimension (d2), telle qu'une largeur, une hauteur ou un diamètre, dans lequel ladite seconde dimension (d2) est la plus grande dimension de ladite seconde section transversale, dans lequel ladite première dimension (d1) est plus grande que ladite seconde dimension (d2) ;
dans lequel lesdits éléments structurels sont agencés l'un par rapport à l'autre à un angle non nul, tel que mesuré entre une direction longitudinale (III) du premier élément structurel (103, 1120) et un axe longitudinal (IV) du second élément tubulaire structurel (104, 304, 1131, 2131), et dans lequel ledit second élément tubulaire structurel (104, 304, 1131, 2131) fait saillie d'une section de paroi du premier élément structurel (103, 1120), dans lequel ledit premier élément structurel (103, 1120) et ledit second élément tubulaire structurel (104, 304, 1131, 2131) sont reliés entre eux au moyen d'une enveloppe en polymère renforcé de fibres intérieure (106, 1132) qui est appliquée autour de la circonférence externe (1042), de préférence entière, du second élément tubulaire structurel (104, 304, 1131, 2131) et qui est appliquée sur un intérieur d'un côté interne (1033) de la section de paroi du premier élément structurel (103, 1120) et reliée à celui-ci.

2. Joint structurel (100, 200, 300, 400, 1130, 2130, 3130) selon la revendication 1, dans lequel ledit premier élément structurel (103, 1120) est un premier élément tubulaire structurel ayant une paroi circonférentielle (1032, 1121) autour d'un axe longitudinal (III) du premier élément tubulaire structurel, dans lequel l'angle non nul est mesuré entre l'axe longitudinal (III, IV) respectif des premier et second éléments tubulaires structurels respectifs et dans lequel ledit côté interne (1033) de la section de paroi est formé par la surface circonférentielle interne de la paroi circonférentielle (1032, 1121) du premier élément tubulaire structurel.

3. Joint structurel (100, 200, 300, 400, 1130, 2130, 3130) selon la revendication 1 ou 2, dans lequel ledit premier élément structurel (103, 1120) comprend un trou traversant qui est agencé à travers la section de paroi du premier élément structurel (103, 1120) ;
dans lequel ladite enveloppe en polymère renforcé de fibres intérieure (106, 1132) est agencée pour recouvrir et se relier à une section circonférentielle interne (1034) du côté interne (1033) de la section de paroi qui entoure, de préférence entièrement, le trou traversant ;
de préférence dans lequel ledit trou traversant est façonné pour correspondre à la première section transversale permettant un ajustement avec jeu du second élément tubulaire structurel (104, 304, 1131, 2131), à l'angle non nul, à travers ledit trou traversant ;
de préférence dans lequel ladite section circonférentielle interne (1034) entourant le trou traversant s'étend vers l'extérieur, par rapport au bord externe du trou traversant, le long du côté interne (1033) de la section de paroi sur une longueur (L4) qui est au moins 0,1 fois la seconde dimension (d2), de préférence au moins 0,25 fois la seconde dimension (d2), plus préférablement au moins 0,5 fois la seconde dimension (d2), encore plus préférablement au moins 1 fois la seconde dimension (d2), le plus préférablement au moins 1,5 fois la seconde dimension (d2) ; et/ou dans lequel la section circonférentielle interne (1034) entourant le trou traversant s'étend vers l'extérieur, par rapport au bord externe du trou traversant, le long du côté interne (1033) de la section de paroi sur une longueur (L4) qui n'est pas supérieure à 10 fois la seconde dimension (d2), de préférence pas supérieure à 5 fois la seconde dimension (d2), plus préférablement pas supérieure à 3 fois la seconde dimension (d2), le plus préférablement pas supérieure à 2 fois la seconde dimension (d2) ; et/ou dans lequel la section circonférentielle interne (1034) ne s'étend pas sur la circonférence interne entière du premier élément structurel (103, 1120), plus préférablement ne s'étend pas sur la moitié de la circonférence interne du premier élément structurel (103, 1120).

4. Joint structurel (100, 200, 300, 400, 1130, 2130, 3130) selon l'une quelconque des revendications précédentes, comprenant en outre une enveloppe en polymère renforcé de fibres extérieure (105, 205, 1133) qui est appliquée sur un extérieur d'un côté externe (1031) de la section de paroi du premier élément structurel (103, 1120) et reliée à ce côté externe, en particulier qui est appliquée autour de la circonférence externe (1031), de préférence entière, du premier élément tubulaire structurel, et qui est agencée à l'extérieur de la circonférence externe (1042), de préférence entière, du second élément tubulaire structurel (104, 304, 1131, 2131), et reliée à celle-ci,
de préférence dans lequel ladite enveloppe en polymère renforcé de fibres extérieure (105, 205, 1133) est agencée comme suit :
ladite enveloppe en polymère renforcée de fibres extérieure (105, 205, 1133) est agencée pour recouvrir, et se relier à, une section circonférentielle externe de la circonférence externe (1031) qui entoure, de préférence entièrement, le trou traversant ;
dans lequel ladite section circonférentielle externe entourant le trou traversant s'étend vers l'extérieur, par rapport au bord externe du trou traversant, le long du côté externe (1031) de la section de paroi sur une longueur (L5) qui est au moins 0,1 fois la seconde dimension (d2), de préférence au moins 0,25 fois la seconde dimension (d2), plus préférablement au moins 0,5 fois la une seconde dimension (d2), encore plus préférablement au moins 1 fois la seconde dimension (d2), le plus préférablement au moins 1,5 fois la seconde dimension (d2) ; et/ou
dans lequel la section circonférentielle externe entourant le trou traversant s'étend vers l'extérieur, par rapport au bord externe du trou traversant, le long du côté externe (1031) de la section de paroi sur une longueur (L5) qui n'est pas supérieure à 10 fois la seconde dimension (d2), de préférence pas supérieure à 5 fois la seconde dimension (d2), plus préférablement pas supérieure à 3 fois la une seconde dimension (d2), le plus préférablement pas plus de 2 fois la seconde dimension (d2) ; et/ou
dans lequel la section circonférentielle externe ne s'étend pas sur la circonférence externe (1122) entière du premier élément structurel (103, 1120), plus préférablement ne s'étend pas au-delà de la moitié de la circonférence externe du premier élément structurel (103, 1120).

5. Joint structurel (100, 200, 300, 400, 1130, 2130, 3130) selon l'une quelconque des revendications précédentes, comprenant en outre une pluralité de seconds éléments tubulaires structurels (104, 304, 1131, 2131), chacun de ladite pluralité de seconds éléments tubulaires structurels (104, 304, 1131, 2131) ayant une seconde section transversale respective qui est, au moins en partie, définie par une seconde dimension (d2) respective, telle qu'une largeur, une hauteur ou un diamètre, dans lequel chaque seconde dimension (d2) respective est la plus grande dimension de ladite seconde section transversale respective du second élément tubulaire structurel respectif ;
dans lequel ledit premier élément structurel (103, 1120) et chacun de la pluralité de seconds éléments tubulaires structurels (104, 304, 1131, 2131) sont agencés l'un par rapport à l'autre à des angles non nuls, tels que mesurés entre la direction longitudinale (III) du premier élément structurel (103, 1120) et l'axe longitudinal (IV) respectif du second élément tubulaire structurel respectif de la pluralité de seconds éléments tubulaires structurels (104, 304, 1131, 2131), et dans lequel le second élément tubulaire structurel respectif de la pluralité de seconds éléments tubulaires structurels (104, 304, 1131, 2131) fait saillie, de préférence à travers un second trou traversant façonné en conséquence respectif, la section de paroi du premier élément structurel (103, 1120) ;
dans lequel ledit premier élément structurel (103, 1120) et chaque second élément tubulaire structurel respectif de la pluralité de seconds éléments tubulaires structurels (104, 304, 1131, 2131) sont reliés entre eux au moyen d'une enveloppe en polymère renforcé de fibres intérieure (106, 1132), de préférence au moyen d'une pluralité correspondante d'enveloppes en polymère renforcé de fibres intérieures (106, 1132), qui est appliquée autour de la circonférence externe (1042), de préférence entière, du second élément tubulaire structurel respectif de la pluralité de seconds éléments tubulaires structurels (104, 304, 1131, 2131) et qui est appliquée sur l'intérieur du côté interne (1033) de la section de paroi du premier élément structurel (103, 1120) et reliée à celui-ci.

6. Joint structurel (300, 400, 2130) selon la revendication 5, dans lequel au moins deux seconds éléments tubulaires structurels (304, 2131) de la pluralité de seconds éléments tubulaires structurels (104, 304, 1131, 2131) sont accouplés au niveau des extrémités internes (1041, 1134, 2134, 3041) respectives qui font saillie dans le premier élément structurel (103, 1120),
de préférence dans lequel les au moins deux seconds éléments tubulaires structurels (304, 2131) de la pluralité de seconds éléments tubulaires structurels (104, 304, 1131, 2131) sont accouplés à l'aide d'une enveloppe en polymère renforcé de fibres auxiliaire (308, 2171) qui est appliquée autour de la circonférence externe, de préférence entière, des extrémités internes (2134, 3041) de chacun des au moins deux seconds éléments structurels tubulaires de la pluralité de seconds éléments tubulaires structurels (104, 304, 1131, 2131) pour relier entre eux les au moins deux seconds éléments tubulaires structurels (304, 2131) de la pluralité de seconds éléments tubulaires structurels (104, 304, 1131, 2131).

7. Joint structurel (300, 400, 2130) selon la revendication 6, comprenant en outre un élément tubulaire structurel auxiliaire (307, 2170), dans lequel ledit élément est agencé, de préférence coaxialement, à l'intérieur du premier élément structurel (103, 1120) et de préférence parallèle à celui-ci ; ledit élément tubulaire structurel auxiliaire (307, 2170) ayant une section transversale qui est, au moins en partie, définie par une dimension (da), telle qu'une largeur, une hauteur ou un diamètre, dans lequel ladite dimension (da) est la plus grande dimension de ladite section transversale de l'élément tubulaire structurel auxiliaire (307, 2170), dans lequel ladite dimension (da) de l'élément tubulaire structurel auxiliaire (307, 2170) est plus petite que la première dimension (d1) ;
dans lequel l'élément structurel auxiliaire (307, 2170) est agencé de telle sorte que son axe longitudinal (VII) croise de préférence l'axe longitudinal (IV) respectif d'au moins l'un des au moins deux seconds éléments tubulaires structurels (304, 2131) de la pluralité de seconds éléments tubulaires structurels (104, 304, 1131, 2131) ; et
dans lequel les extrémités internes (2134, 3041) des au moins deux seconds éléments tubulaires structurels (304, 2131) de la pluralité de seconds éléments tubulaires structurels (104, 304, 1131, 2131) sont accouplées à l'élément tubulaire structurel auxiliaire (307, 2170).

8. Joint structurel (300, 400, 2130) selon la revendication 6 et 7, dans lequel l'enveloppe en polymère renforcée de fibres auxiliaire (308, 2171) est également appliquée autour de la circonférence externe (3071), de préférence entière, de l'élément tubulaire auxiliaire (307, 2170) pour accoupler les au moins deux seconds éléments tubulaires structurels (304, 2131) de la pluralité de seconds éléments tubulaires structurels (104, 304, 1131, 2131) au niveau de leurs extrémités internes (2134, 3041) à l'élément tubulaire structurel auxiliaire (307, 2170).

9. Joint structurel (100, 200, 300, 400, 1130, 2130, 3130) selon l'une quelconque des revendications précédentes, dans lequel un rapport non nul de la seconde dimension (d2) à la première dimension (d1) n'est pas supérieur à 0,83, de préférence pas supérieur à 0,5, plus préférablement pas supérieur à 0,33, encore plus préférablement pas supérieur à 0,25, le plus préférablement pas supérieur à 0,1 ; et/ou dans lequel ledit premier élément tubulaire structurel est un élément de corde (103) et ledit second élément tubulaire structurel est un élément de cale (104, 304) d'une structure en treillis.

10. Joint structurel (100, 200, 300, 400, 1130, 2130, 3130) selon l'une quelconque des revendications précédentes, dans lequel lesdits éléments structurels sont constitués de métal, en particulier d'acier, plus particulièrement d'acier de qualité structurelle, d'un matériau composite, en particulier d'un matériau composite renforcé de fibres, tel qu'un matériau composite renforcé de fibres de carbone et/ou renforcé de fibres de verre, ou d'une combinaison de ceux-ci.

11. Joint structurel (100, 200, 300, 400, 1130, 2130, 3130) selon l'une quelconque des revendications précédentes, dans lequel l'enveloppe en polymère renforcée de fibres intérieure et/ou extérieure (105, 106, 205, 1132, 1133) a une longueur (L2, L3) dans la direction longitudinale (IV) du second élément tubulaire structurel (104, 304, 1131, 2131) qui est dans la plage de 0,1 à 10 fois, de préférence 0,5 à 5, plus préférablement 0,75 à 4, encore plus préférablement 1 à 3, le plus préférablement 1,5 à 2,5 fois la seconde dimension (d2) du second élément tubulaire structurel (104, 304, 1131, 2131).

12. Joint structurel (100, 200, 300, 400, 1130, 2130, 3130) selon l'une quelconque des revendications précédentes, dans lequel l'enveloppe en polymère renforcée de fibres intérieure et/ou extérieure (105, 106, 205, 1132, 1133) a une épaisseur mesurée transversalement à la direction longitudinale (IV) du second élément tubulaire structurel (104, 304, 1131, 2131), qui est de préférence dans la plage de 0,5 à 10, plus préférablement 0,75 à 5, encore plus préférablement 1 à 4, le plus préférablement 1,5 à 3 fois l'épaisseur de la paroi circonférentielle (1032, 1121) du second élément tubulaire structurel (104, 304, 1131, 2131) ; et/ou
dans lequel l'enveloppe en polymère renforcé de fibres intérieure et/ou extérieure (105, 106, 205, 1132, 1133) comprend une section effilée qui s'effile, dans une direction longitudinale (IV) du second élément tubulaire structurel (104, 304, 1131, 2131) en s'éloignant de la paroi circonférentielle (1032, 1121) du premier élément structurel (103, 1120), d'une épaisseur maximale vers une épaisseur minimale de ladite section effilée.

13. Structure de support comprenant un joint
structurel (100, 200, 300, 400, 1130, 2130, 3130) selon l'une quelconque des revendications précédentes, en particulier une structure de support en haute mer, comprenant, par exemple, une structure de fondation fixe à multiples membres au fond de la mer ou une structure de fondation flottante, destinée à supporter un objet, tel qu'une plate-forme en haute mer ou une turbine éolienne, dans laquelle ledit joint structurel (100, 200, 300, 400, 1130, 2130, 3130) est agencé pour un accouplement d'une première section de structure de support comprenant le premier élément structurel (103, 1120) et une seconde section de structure de support comprenant le second élément tubulaire structurel (104, 304, 1131, 2131).

14. Pièce de transition (1100, 2100, 3100) destinée à être utilisée dans une structure de support en haute mer pour une turbine éolienne en haute mer, dans laquelle ladite pièce de transition (1100, 2100, 3100) comprend un joint
structurel (100, 200, 300, 400, 1130, 2130, 3130) selon l'une quelconque des revendications précédentes 1 à 12, et dans laquelle ladite pièce de transition (1100, 2100, 3100) est agencée pour accoupler un bas d'un mât de la turbine éolienne à une extrémité supérieure d'une structure de fondation en haute mer, telle qu'une fondation monopieu, une fondation tripode, une fondation de type chemise, une fondation flottante semi-submersible, une fondation flottante à bouée ou une fondation flottante de plate-forme à lignes tendues (TLP), ou une combinaison de celles-ci.

15. Procédé de fabrication d'un joint
structurel (100, 200, 300, 400, 1130, 2130, 3130) selon l'une quelconque des revendications précédentes 1 à 12, comprenant les étapes consistant à :
- fournir le premier élément structurel (103, 1120) et le second élément tubulaire structurel (104, 304, 1131, 2131) ;
- amener à faire saillie ledit second élément tubulaire
structurel (104, 304, 1131, 2131) à un angle non nul, tel que mesuré entre une direction longitudinale (III) du premier élément structurel (103, 1120) et un axe longitudinal (IV) du second élément tubulaire structurel (104, 304, 1131, 2131), à travers une section de paroi du premier élément structurel (103, 1120) ;
- maintenir lesdits éléments structurels pour qu'ils restent en saillie à l'angle non nul, éventuellement fournir une fixation temporaire et/ou auxiliaire pour maintenir lesdits éléments structurels l'un par rapport à l'autre à l'angle non nul ;
- appliquer une enveloppe en polymère renforcé de fibres intérieure (106, 1132) autour de la circonférence externe (1042), de préférence entière, du second élément tubulaire structurel (104, 304, 1131, 2131) et sur un intérieur d'un côté interne (1033) de la section de paroi du premier élément structurel (103, 1120), de telle sorte qu'elle est reliée à ce côté interne, pour relier entre eux le premier élément structurel (103, 1120) et le second élément tubulaire structurel (104, 304, 1131, 2131).
